(19) Europäisches Patentamt
European Patent Office
Office européen des brevets

(11) **EP 4 601 172 A1**

(12) **EUROPEAN PATENT APPLICATION**

(43) Date of publication:
**13.08.2025 Bulletin 2025/33**

(21) Application number: **25156266.6**

(22) Date of filing: **06.02.2025**

(51) International Patent Classification (IPC):
**H02M 1/00** (2006.01)    **H02M 3/00** (2006.01)
**H02M 3/335** (2006.01)    **H01F 27/34** (2006.01)

(52) Cooperative Patent Classification (CPC):
**H02M 3/01; H01F 3/14; H01F 27/34; H01F 27/38;
H01F 30/12; H02M 1/0048; H02M 1/0058;
H02M 1/0064; H02M 1/0074; H02M 3/003;
H02M 3/33573; H02M 3/33592**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.02.2024 US 202463550169 P**

(71) Applicant: **Delta Electronics, Inc.
Neihu, Taipei 11491 (TW)**

(72) Inventors:
• **Wang, Dakai
Durham, NC, 27709 (US)**
• **Tsai, Meng-Chi
11491 Taipei (TW)**
• **Peng, Te-Chih
11491 Taipei (TW)**
• **Barbosa, Peter Mantovanelli
Durham, NC, 27709 (US)**

(74) Representative: **Uexküll & Stolberg
Partnerschaft von
Patent- und Rechtsanwälten mbB
Beselerstraße 4
22607 Hamburg (DE)**

(54) **THREE-PHASE LLC POWER CONVERSION CIRCUIT AND CONTROL METHOD THEREOF**

(57)    A three-phase power conversion circuit (1, 1a, 1b, 1c, 1d, 1e) and a control method thereof are disclosed. The three-phase LLC power conversion circuit (1, 1a, 1b, 1c, 1d, 1e) receives an input voltage ($V_{in}$), outputs an output voltage ($V_o$), and includes a three-phase transformer (T), an input switch group (2), an output switch group (3) and a resonant circuit group. The control method includes steps of: S1: detecting each zerocrossing point of the input voltage ($V_{in}$), the output voltage ($V_o$) and each output current in each phase; and S2: controlling the output switch group (3) according to a ratio of the output voltage ($V_o$) to the input voltage ($V_{in}$), wherein a switching state of at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) is controlled to lead/lag the corresponding input switch, and/or adjusting each of the phases of the input switches ($Q_1$, $Q_2$, $Q_3$, $Q_4$, $Q_5$, $Q_6$) to increase a duty cycle, wherein switching frequencies of the plurality of input switches ($Q_1$, $Q_2$, $Q_3$, $Q_4$, $Q_5$, $Q_6$) are adjusted according to the output voltage ($V_o$), a reference voltage ($V_{ref}$) and a soft switching setting condition.

FIG. 2

EP 4 601 172 A1

## Description

### FIELD OF THE APPLICATION

The present disclosure relates to a power conversion circuit, and more particularly to a three-phase LLC power conversion circuit and a control method thereof.

### BACKGROUND OF THE APPLICATION

With the fast development of information technology (IT), especially cloud computing, big data, and artificial intelligence (AI), the power consumption of data centers is increasing significantly. The power level and the power density of power conversion circuits that provide power to the data center need to be increased a lot. Compared with the unidirectional power conversion circuit, the three-phase LLC power conversion circuit has been widely utilized in data center because of lower RMS, lower peak current, and better magnetic integrations.

However, for the three-phase LLC power conversion circuit, due to the interaction between three phases, the control becomes more complicated. For example, in a single-phase power conversion circuit, the phase-shift control is utilized to narrow down the switching frequency range, so that the single-phase power conversion circuit is suitable for wide voltage range applications. However, in the three-phase LLC power conversion circuit, there are two control freedoms, and the phase-shift control cannot work around the change of the resonant frequency, which will result in significant reactive current and cannot accurately control the switch for soft switching. Therefore, there is still room for improvement in the control of the three-phase LLC power conversion circuit.

In addition, the three-phase LLC power conversion circuit usually includes three-phase transformers and three-phase inductors. In order to reduce the core and copper losses, the three-phase inductors and three-phase transformers are integrated into one single magnetic component. However, the conventional magnetic component with the three-phase inductors and three-phase transformers integrated has poor magnetic flux cancellation. Therefore, there is still room for improvement in the magnetic core loss and volume reduction.

Therefore, there is a need of providing a three-phase power conversion circuit and a control method thereof to obviate the drawbacks encountered from the prior arts.

### SUMMARY OF THE APPLICATION

It is an object of the present disclosure to provide a three-phase power conversion circuit and a control method thereof for reducing the switching frequency range of the three-phase power conversion circuit, and achieving lower RMS current and peak current, and better magnetic integrations. In addition, since the control unit of the three-phase power conversion circuit controls the two control freedoms of phase-shaft and frequency, it can solve the increase of reactive current due to the change of resonant frequency, and the switch can perform soft-switching more accurately.

In accordance with an aspect of the present disclosure, a control method of a three-phase LLC power conversion circuit is provided. The three-phase LLC power conversion circuit receives an input voltage and outputs an output voltage, and includes a three-phase transformer, an input switch group, an output switch group and a resonant circuit group. The input switch group is electrically connected to a plurality of primary windings of the three-phase transformer and includes a plurality of input switches, the output switch group is electrically connected to a plurality of secondary windings of the three-phase transformer and includes a plurality of rectification switches, and the resonant circuit group is electrically connected between the input switch group and the plurality of primary windings. The control method includes steps of (S1) detecting each zero-crossing point of the input voltage, the output voltage and each output current of the three-phase LLC power conversion circuit in each phase; and (S2) controlling the plurality of input switches to perform switching operation and controlling the plurality of rectification switches to perform synchronous rectification switching operation based on the detection results of the step S1, and controlling the output switch group in each phase according to a ratio of the output voltage to the input voltage, wherein a switching state of at least one of the rectification switches is controlled to lead or lag a switching state of the corresponding input switch, and/or adjusting the plurality of input switches in each phase to increase a duty cycle, so that the ratio of the output voltage to the input voltage is increased, wherein switching frequencies of the plurality of input switches are adjusted according to the output voltage, a reference voltage and a soft switching setting condition, so that the plurality of input switches perform soft switching.

In accordance with another aspect of the present disclosure, a three-phase LLC power conversion circuit is provided. The three-phase LLC power conversion circuit is configured to receive an input voltage and output an output voltage, and includes an input switch group, a three-phase transformer, a resonant circuit group and an output switch group. The input switch group receives the input voltage and includes a plurality of input switches. The three-phase transformer includes a plurality of primary windings and a plurality of secondary windings, wherein the input switch group is electrically connected to the plurality of primary windings. The resonant circuit group is electrically connected between the input switch group and the plurality of primary windings, and includes a plurality of first resonant elements and a plurality of second resonant elements, wherein the plurality of first resonant elements are star-connected and respectively formed by an inductor or respectively formed by a capacitor, and the plurality of second resonant elements are delta-connected and respectively formed by the inductor. The output switch group is electrically connected to the plurality of secondary windings and outputs the output voltage.

BRIEF DESCRIPTION OF THE DRAWINGS

The above contents of the present disclosure will become more readily apparent to those ordinarily skilled in the art after reviewing the following detailed description and accompanying drawings, in which:

FIG. 1 is a flow chart illustrating a control method according to an embodiment of the present disclosure;

FIG. 2 is a schematic diagram of a circuit topology of a three-phase LLC power conversion circuit applied to the control method shown in FIG. 1 according to a first embodiment of the present disclosure;

FIG. 3 to FIG. 6 show the operating waveforms of the three-phase LLC power conversion circuit when the control unit of the three-phase LLC power conversion circuit shown in FIG. 2 is performed in different implementation modes;

FIG. 7 is a schematic diagram of a circuit topology of a three-phase LLC power conversion circuit according to a second embodiment of the present disclosure;

FIG. 8 is a schematic diagram of a circuit topology of a three-phase LLC power conversion circuit according to a third embodiment of the present disclosure;

FIG. 9 is a schematic diagram of a circuit topology of a three-phase LLC power conversion circuit according to a fourth embodiment of the present disclosure;

FIG. 10 and FIG. 11 show the operating waveforms of the three-phase LLC power conversion circuit when the control unit of the three-phase LLC power conversion circuit is performed in different implementation modes;

FIG. 12 is a schematic diagram of a circuit topology of a three-phase LLC power conversion circuit according to a fifth embodiment of the present disclosure;

FIG. 13 shows the operating waveforms of the three-phase LLC power conversion circuit when the control unit of the three-phase LLC power conversion circuit is operated;

FIG. 14 is a schematic diagram of a circuit topology of a three-phase LLC power conversion circuit according to a sixth embodiment of the present disclosure;

FIG. 15A is a circuit diagram of a magnetic component for a three-phase LLC power conversion circuit according to a first embodiment of the present disclosure;

FIG. 15B is a schematic diagram showing the arrangement positions of the three-phase transformer and the three-phase resonant inductor of the magnetic component shown in FIG. 15A;

FIG. 15C is a schematic diagram showing a partial magnetic flux vector of the magnetic component shown in FIG. 15B;

FIG. 16A is a schematic diagram showing another example of the arrangement positions of the three-phase transformer and the three-phase resonant inductor of the magnetic component shown in FIG. 15A;

FIG. 16B is a schematic diagram showing a partial magnetic flux vector of the magnetic component shown in FIG. 16A;

FIG. 17A is a circuit diagram of a magnetic component for a three-phase LLC power conversion circuit according to a second embodiment of the present disclosure;

FIG. 17B is a circuit diagram of a magnetic component for a three-phase LLC power conversion circuit according to a third embodiment of the present disclosure;

FIG. 17C is a schematic diagram showing the arrangement positions of the three-phase transformer and the three-phase resonant inductor of the magnetic component shown in FIG. 17A or FIG. 17B;

FIG. 17D is a schematic diagram showing a partial magnetic flux vector of the magnetic component shown in FIG. 17C;

FIG. 18A is a schematic diagram showing another example of the arrangement positions of the three-phase transformer and the three-phase resonant inductor of the magnetic component shown in FIG. 17A or FIG. 17B;

FIG. 18B is a schematic diagram showing a partial magnetic flux vector of the magnetic component shown in FIG. 18A;

FIG. 19A is a circuit diagram of a magnetic component for a three-phase LLC power conversion circuit according to a fourth embodiment of the present disclosure;

FIG. 19B is a schematic diagram showing the arrangement positions of the three-phase transformer and the three-phase resonant inductor of the magnetic component shown in FIG. 19A;

FIG. 19C is a schematic diagram showing a partial magnetic flux vector of the magnetic component shown in FIG. 19B;

FIG. 20A is a schematic diagram showing another example of the arrangement positions of the three-phase transformer and the three-phase resonant inductor of the magnetic component shown in FIG. 19A;

FIG. 20B is a schematic diagram showing a partial magnetic flux vector of the magnetic component shown in FIG. 20A;

FIG. 21A is a circuit diagram of a magnetic component for a three-phase LLC power conversion circuit according to a fifth embodiment of the present disclosure;

FIG. 21B is a schematic diagram showing the arrangement positions of the three-phase transformer and the three-phase resonant inductor of the magnetic component shown in FIG. 21A;

FIG. 21C is a schematic diagram showing a partial magnetic flux vector of the magnetic component shown in FIG. 21B;

FIG. 22A is a schematic diagram showing another example of the arrangement positions of the three-phase transformer and the three-phase resonant inductor of the magnetic component shown in FIG. 21A;

FIG. 22B is a schematic diagram showing a partial magnetic flux vector of the magnetic component shown in FIG. 22A;

FIG. 23A is a circuit diagram of a magnetic component for a three-phase LLC power conversion circuit according to a sixth embodiment of the present disclosure;

FIG. 23B is a circuit diagram of a magnetic component for a three-phase LLC power conversion circuit according to a seven embodiment of the present disclosure;

FIG. 23C is a circuit diagram of a magnetic component for a three-phase LLC power conversion circuit according to an eighth embodiment of the present disclosure;

FIG. 23D is a circuit diagram of a magnetic component for a three-phase LLC power conversion circuit according to a ninth embodiment of the present disclosure;

FIG. 23E is a schematic diagram showing the arrangement positions of the three-phase transformer and the three-phase resonant inductor of the magnetic component shown in FIG. 23A, FIG. 23B, FIG. 23C or FIG. 23D;

FIG. 23F is a schematic diagram showing a partial magnetic flux vector of the magnetic component shown in FIG. 23E;

FIG. 24 is a schematic diagram showing another example of the arrangement positions of the three-phase transformer and the three-phase resonant inductor of the magnetic component shown in FIG. 15A; and

FIG. 25 is a schematic diagram showing another example of the arrangement positions of the three-phase transformer and the three-phase resonant inductor of the magnetic component shown in FIG. 23E.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

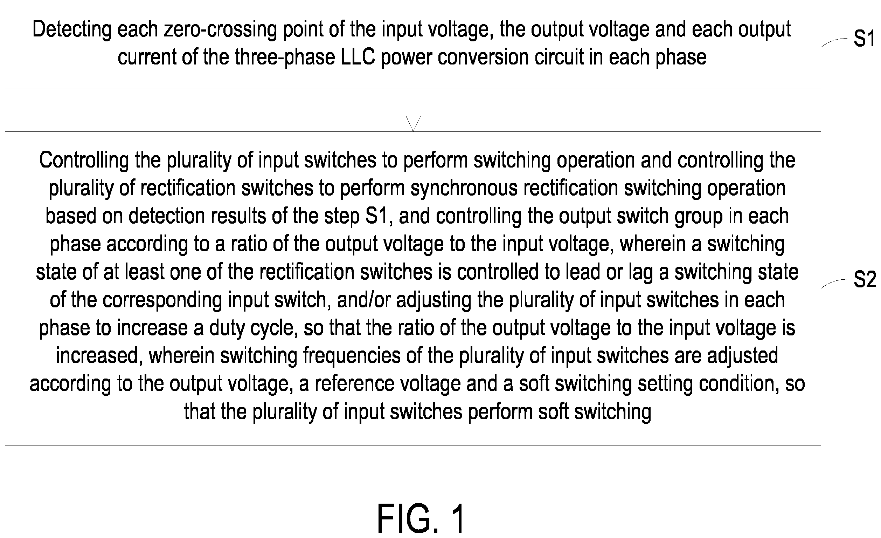

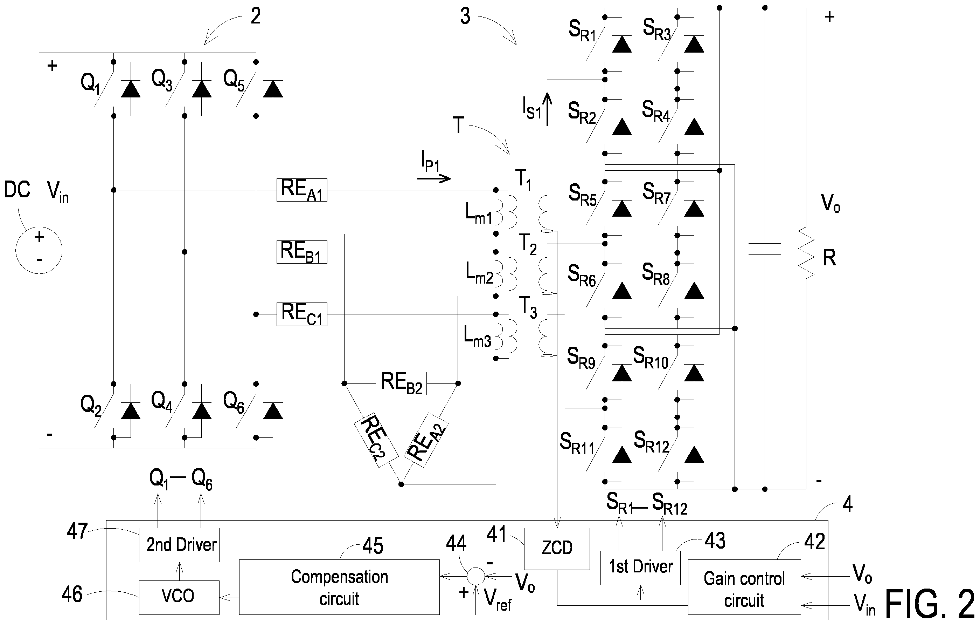

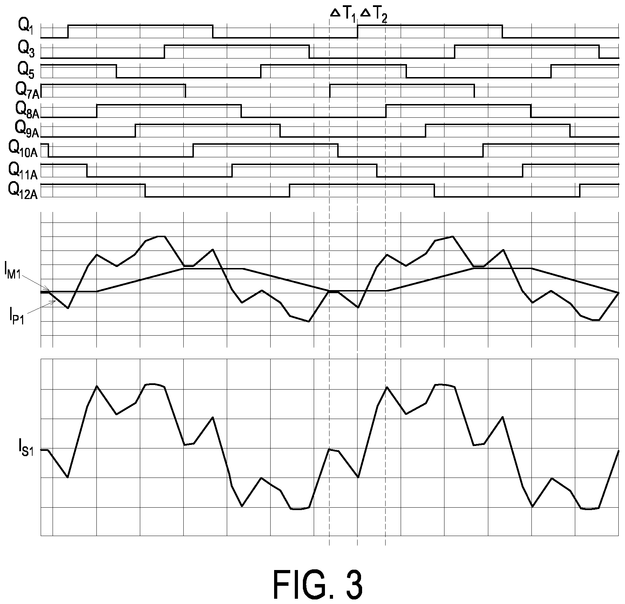

FIG. 1 is a flow chart illustrating a control method according to an embodiment of the present disclosure. FIG. 2 is a schematic diagram of a circuit topology of a three-phase LLC power conversion circuit applied to the control method shown in FIG. 1 according to a first embodiment of the present disclosure. FIG. 3 to FIG. 6 show the operating waveforms of the three-phase LLC power conversion circuit when the control unit of the three-phase LLC power conversion circuit shown in FIG. 2 is performed in different implementation modes. As sown in FIG. 1, FIG. 2, FIG. 3, FIG. 4, FIG. 5 and FIG 6, in the embodiment, the control method of the present disclosure can be applied to a common three-phase LLC power conversion circuit, or the three-phase LLC power conversion circuit 1 shown in FIG. 2. Since there are many circuit topologies of the three-phase LLC power conversion circuit, it is impossible to describe them one by one. Therefore, the control method of the embodiment of the present disclosure will be exemplified by the three-phase LLC power conversion circuit 1 shown in FIG. 2, and the present disclosure is not limited thereto. An input end of the three-phase LLC power conversion circuit 1 is electrically connected to an input power source DC to receive an input voltage $V_{in}$, and an output end of the three-phase LLC power conversion circuit 1 is electrically connected to a load R to provide an output voltage $V_o$ to the load R. The three-phase LLC power conversion circuit 1 includes a three-phase transformer T, an input switch group 2, an output switch group 3, a control unit 4 and a resonant circuit group.

The input switch group 2 is electrically connected to the input end of the three-phase LLC power conversion circuit 1 and includes a first upper input switch $Q_1$, a first lower input switch $Q_2$, a second upper input switch $Q_3$, and a second lower input switch $Q_4$, a third upper input switch $Q_5$ and a third lower input switch $Q_6$. The first upper input switch $Q_1$ and the first lower input switch $Q_2$ are connected in series to form a first input switch bridge. The first upper input switch $Q_1$ and the first lower input switch $Q_2$ are connected to a first contact point. The second upper input switch $Q_3$ and the second lower input switch $Q_4$ are connected in series to form a second input switch bridge. The second upper input switch $Q_3$ and the second lower input switch $Q_4$ are connected to the second contact point. The third upper input switch $Q_5$ and the third lower input switch $Q_6$ are connected in series to form a third input switch bridge. The third upper input switch $Q_5$ and the third lower input switch $Q_6$ are connected to a third contact point. Moreover, the first input switch bridge, the second input switch bridge and the third input switch bridge are connected in parallel.

The three-phase transformer T includes a first transformer $T_1$, a second transformer $T_2$ and a third transformer $T_3$. Each of the first transformer $T_1$, the second transformer $T_2$ and the third transformer $T_3$ has

a primary winding and a secondary winding. In some embodiments, the first transformer $T_1$, the second transformer $T_2$ and the third transformer $T_3$ respectively include magnetizing inductors $L_{m1}$, $L_{m2}$, $L_{m3}$, which are connected to the primary windings of the first transformer $T_1$, the second transformer $T_2$ and the third transformer $T_3$ in parallel.

The resonant circuit group is electrically connected between the input switch group 2 and the plurality of primary windings of the three-phase transformer T. In the embodiment, the resonant circuit group includes a plurality of first resonant elements $RE_{A1}$, $RE_{B1}$, $RE_{ci}$ and a plurality of second resonant elements $RE_{A2}$, $RE_{B2}$, $RE_{C2}$. The plurality of first resonant elements $RE_{A1}$, $RE_{B1}$, $RE_{C1}$ are star-connected (i.e., Y-connected), and can be respectively formed by an inductor or respectively formed by a capacitor. Preferably but not exclusively, the first resonant element $RE_{A1}$ is electrically connected between the first contact point and the first end of the primary winding of the first transformer $T_1$. The first resonant element $RE_{B1}$ is electrically connected between the second contact point and the first end of the primary winding of the second transformer $T_2$. The first resonant element $RE_{ci}$ is electrically connected between the third contact point and the first end of the primary winding of the third transformer $T_3$. The plurality of second resonant elements $RE_{A2}$, $RE_{B2}$, $RE_{C2}$ are delta-connected in a triangle (i.e., $\Delta$ connection) and are respectively formed by an inductor. The respective endpoints of any two second resonant elements $RE_{A2}$, $RE_{B2}$, $RE_{C2}$ are electrically connected to each other and to the second end of the primary winding of the corresponding one of the first transformer $T_1$, the second transformer $T_2$ and the third transformer $T_3$. Since the plurality of second resonant elements $RE_{A2}$, $RE_{B2}$, $RE_{C2}$ are delta-connected (i.e., $\Delta$ connection) and are respectively formed by an inductor, the inductance of the second resonant elements $RE_{A2}$, $RE_{B2}$, $RE_{C2}$ is increased by 3 times compared to that of the star connection mode. Moreover, the current is reduced by $\sqrt{3}$ times compared to that of the star connection mode. The wire cross-sectional area is reduced by 3 times compared to that of the star connection mode. The number of winding turns is only increased by $\sqrt{3}$ times compared to the star connection mode. The loss and the volume remain unchanged compared to that of the star connection mode. In some embodiments, the plurality of second resonant elements $RE_{A2}$, $RE_{B2}$, $RE_{C2}$ are respectively formed by capacitors.

The output switch group 3 is electrically connected between the plurality of secondary windings of the three-phase transformer T and the output end of the three-phase LLC power conversion circuit 1. In the embodiment, the output switch group 3 includes a first synchronous rectification switch group, a second synchronous rectification switch group, and a third synchronous rectification switch group, which are respectively coupled to the secondary windings of the corresponding one of the first transformer $T_1$, the second transformer $T_2$ and the third transformer $T_3$. In some embodiments, the first synchronous rectification switch group includes a first upper rectification switch $S_{R1}$, a first lower rectification switch $S_{R2}$, a second upper rectification switch $S_{R3}$ and a second lower rectification switch $S_{R4}$. The first upper rectification switch $S_{R1}$ and the first lower rectification switch $S_{R2}$ are connected in series to form a first rectification bridge. The second upper rectification switch $S_{R3}$ and the second lower rectification switch $S_{R4}$ are connected in series to form a second rectification bridge. The first rectification bridge and the second rectification bridge are connected in parallel. The second synchronous rectification switch group includes a third upper rectification switch $S_{R5}$, a third lower rectification switch $S_{R6}$, a fourth upper rectification switch $S_{R7}$ and a fourth lower rectification switch $S_{R8}$. The third upper rectification switch $S_{R5}$ and the third lower rectification switch $S_{R6}$ are connected in series to form a third rectification bridge. The fourth upper rectification switch $S_{R7}$ and the fourth lower rectification switch $S_{R8}$ are connected in series to form a fourth rectification bridge. The third rectification bridge and the fourth rectification bridge are connected in parallel. The third synchronous rectification switch group includes a fifth upper rectification switch $S_{R9}$, a fifth lower rectification switch $S_{R10}$, a sixth upper rectification switch $S_{R11}$ and a sixth lower rectification switch $S_{R12}$. The fifth upper rectification switch $S_{R9}$ and the fifth lower rectification switch $S_{R10}$ are connected in series to form a fifth rectification bridge. The sixth upper rectification switch $S_{R11}$ and the sixth lower rectification switch $S_{R12}$ are connected in series to form a sixth rectification bridge. The fifth rectification bridge and the sixth rectification bridge are connected in parallel. In some other embodiments, the first upper rectification switch $S_{R1}$, the first lower rectification switch $S_{R2}$, the second upper rectification switch $S_{R3}$, the second lower rectification switch $S_{R4}$, the third upper rectification switch $S_{R5}$, the third lower rectification switch $S_{R6}$, the fourth upper rectification switch $S_{R7}$, the fourth lower rectification switch $S_{R8}$, the fifth upper rectification switch $S_{R9}$, the fifth lower rectification switch $S_{R10}$, the sixth upper rectification switch $S_{R11}$ and the sixth lower rectification switch $S_{R12}$ are respectively formed by an active switch, such as a metal oxide semi-conductor field effect transistor. Since the first synchronous rectification switch group, the second synchronous rectification switch group and the third synchronous rectification switch group of the output switch group 3 in the three-phase LLC power conversion circuit 1 are full bridge topologies, the voltage stress of each rectification switch in the first synchronous rectification switch group, the second synchronous rectification switch group and the third synchronous rectification switch group can be reduced, and the control freedom of the output switch group 3 can be increased. In the above embodiment, the first input switch bridge, the first

transformer $T_1$, the first resonant element $RE_{A1}$, the second resonant element $RE_{A2}$ and the first synchronous rectification switch group collaboratively form the first phase of the three-phase LLC power conversion circuit 1. The second input switch bridge, the second transformer $T_2$, the first resonant element $RE_{B1}$, the second resonant element $RE_{B2}$ and the second synchronous rectification switch group collaboratively form the second phase of the three-phase LLC power conversion circuit 1. The third transformer $T_3$, the first resonant element $RE_{C1}$, the second resonant element $RE_{C2}$ and the third synchronous rectification switch group collaboratively form the third phase of the three-phase LLC power conversion circuit 1.

The control unit 4 is electrically connected to the input switch group 2 and the output switch group 3 for detecting each zero-crossing point of the input voltage $V_{in}$, the output voltage $V_o$ and the output current in each phase. Based on the detection results, the control unit 4 controls the first upper input switch $Q_1$ to the third lower input switch $Q_6$ of the input switch group 2 to perform switching operation, and controls the first upper rectification switch $S_{R1}$ to the sixth lower rectification switch $S_{R12}$ of the output switch group 3 to perform synchronous rectification switching operation. Preferably but not exclusively, the switching actions of any two upper input switches in the input switch group 2 are interleaved with 120 degrees from each other, and the switching actions of the upper input switch and the lower input switch in each input switch bridge of the input switch group 2 are complementary with reasonable deadtime to prevent shoot-through. The switching actions of the upper rectification switch and the lower rectification switch in each rectification bridge of the output switch group 3 are complementary with reasonable deadtime to prevent shoot-through. In addition, according to a ratio of the output voltage $V_o$ and the input voltage $V_{in}$, the control unit 4 further controls a switching state of at least one rectification switch of the synchronous rectification switch group in each phase of the output switch group 3 to lead or lag the corresponding input switch in the input switch bridge with the same phase (i.e., the input switch is corresponding to the at least one rectification switch to lead or lag at turned on phase angle), and/or adjusts all input switches in each input switch bridge of the input switch group 2 to increase a duty cycle, so that the ratio of the output voltage $V_o$ to the input voltage $V_{in}$ is increased. In addition, the control unit 4 further adjusts the switching frequency of all input switches in the input switch group 2 according to the output voltage $V_o$, a reference voltage $V_{ref}$ and the soft switching setting condition, so that all input switches of the input switch group 2 perform soft switching.

In an embodiment, the three-phase LLC power conversion circuit 1 has each phase to be operated with a phase difference of 120 degrees, and the two switches of the switch bridge in each phase are operated complementary. Therefore, FIG. 3 only illustrates some operating parameters of the three-phase LLC power conversion circuit 1 to describe the technology of the present disclosure. In FIG. 3 to FIG. 6, symbols $Q_{1A}$, $Q_{3A}$, $Q_{5A}$ respectively represent the switching states of the first upper input switch $Q_1$, the second upper input switch $Q_3$ and the third upper input switch $Q_5$ in the input switch group 2. Symbols $Q_{7A}$, $Q_{8A}$ respectively represent the switching states of the synchronous rectification switches (i.e., the diagonal first upper rectification switch $S_{R1}$ and the second lower rectification switch $S_{R4}$) which are in the same phase with and corresponding to the first upper input switch $Q_1$. The switching state of the first upper rectification switch $S_{R1}$ leads the switching state of the first upper input switch $Q_1$ by a first time $\triangle T_1$, and the switching state of the second lower rectification switch $S_{R4}$ lags the switching state of the first upper input switch $Q_1$ by a second time $\triangle T_2$. Symbols $Q_{9A}$, $Q_{10A}$ respectively represent the switching states of the synchronous rectification switches (i.e., the diagonal third upper rectification switch $S_{R5}$ and the fourth lower rectification switch $S_{R8}$) which are in the same phase with and corresponding to the second upper input switch $Q_3$. The switching state of the third upper rectification switch $S_{R5}$ leads the switching state of the second upper input switch $Q_3$, and the fourth lower rectification switch $S_{R8}$ lags the switching state of the second upper input switch $Q_3$. Symbols $Q_{11A}$, $Q_{12A}$ respectively represent the switching states of the synchronous rectification switches (i.e., the diagonal fifth upper rectification switch $S_{R9}$ and the sixth lower rectification switch $S_{R12}$) which are in the same phase with and corresponding to the third upper input switch $Q_5$. The switching state of the fifth upper rectification switch $S_{R9}$ leads the switching state of the third upper input switch $Q_5$, and the switching state of the sixth lower rectification switch $S_{R12}$ lags the switching state of the third upper input switch $Q_5$. Symbol $I_{p1}$ is the current flowing through the primary winding of the first transformer $T_1$ in the first phase of the three-phase LLC power conversion circuit 1. Symbol $I_{M1}$ is the current flowing through the magnetizing inductance $L_{m1}$ of the first transformer $T_1$ in the first phase of the three-phase LLC power conversion circuit 1. Symbol $I_{s1}$ is the current flowing through the secondary winding of the first transformer $T_1$ in the first phase of the three-phase LLC power conversion circuit 1.

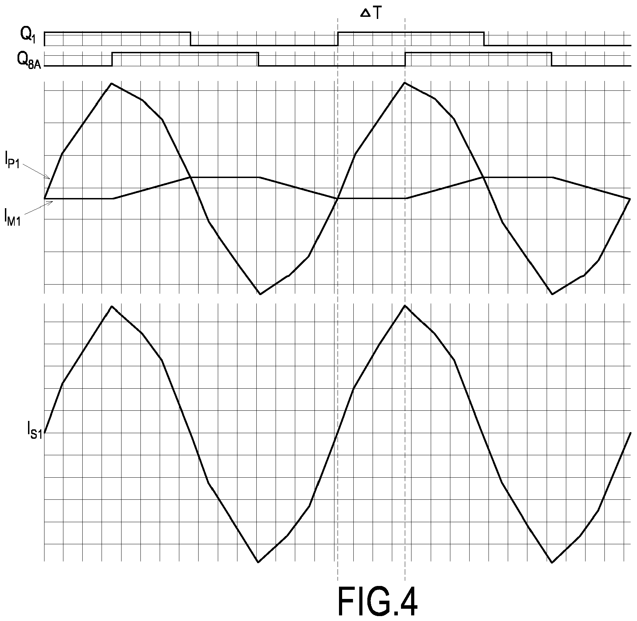

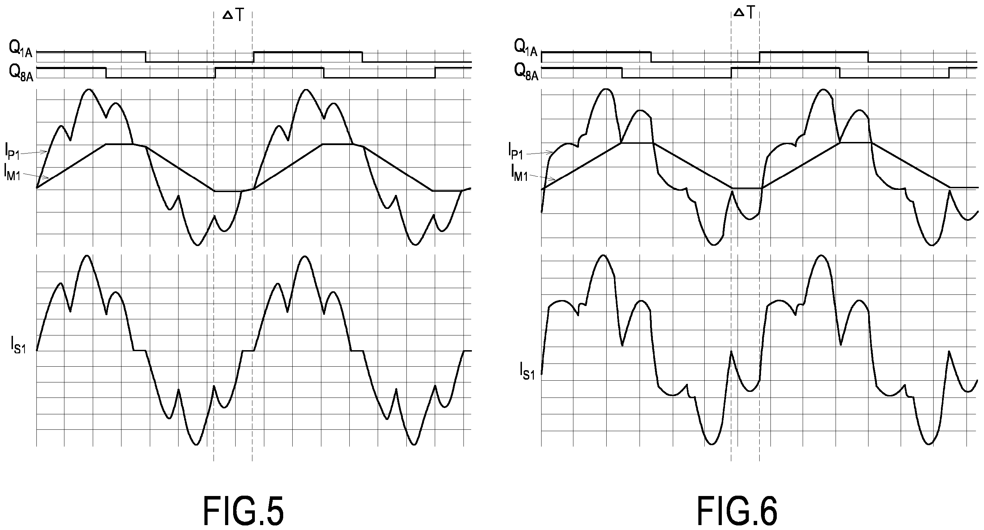

As shown in FIG. 3, the control unit 4 controls the switching state of at least one rectification switch of the synchronous rectification switch group in each phase of the output switch group 3 to lead the switching state of the synchronous rectification switch in the same phase according to the ratio of the output voltage $V_o$ to the input voltage $V_{in}$. In addition, the control unit 4 controls the switching state of the corresponding input switch in the input switch bridge, and the switching state of at least one remaining rectification switch of the synchronous rectification switch group in each phase of the output switch group 3 lags the switching state of the corresponding input switch of the input switch bridge in the same phase. As shown in FIG. 4, alternatively, the control unit 4 can also be changed to control at least one rectification switch of the synchronous rectification switch group in each phase of the output switch group 3 to perform synchronous rectification switching, and control the switching state of at least one remaining rectification switch of the synchronous rectification switch group in each phase of the output switch group 3 lags the switching state of the corresponding input switch of the input switch bridge in the same phase. As shown in FIG. 5 and FIG. 6, alternatively, the control unit 4 can also be changed to control at least one rectification switch of the synchronous rectification switch group in each phase of the output switch group 3 to perform synchronous rectification switching, and control the switching state of at least one remaining rectification switch of the synchronous rectification switch group in each phase of the output switch group 3 leads the switching state of the corresponding input switch of the input switch bridge in the same phase by a third time ΔT. In addition, as shown in FIG. 6, the control unit 4 further adjusts the switching frequencies of all input switches of the input switch group 2 according to the soft switch setting conditions. All input switches of the input switch group 2 perform soft switching.

From the above, the three-phase LLC power conversion circuit 1 of the present disclosure can not only reduce the frequency range of the switch, but also has lower RMS current, lower peak current and better magnetic integration. Furthermore, since the control unit 4 controls two control freedoms, namely the phase-shift and the switching frequency of the switch, the reactive current increased due to the change of the resonant frequency can be solved, and the switch can be accurately controlled for soft switching.

In some embodiments, the control unit 4 includes a zero current detection (ZCD) circuit 41, a gain control circuit 42, a first driver 43, a subtractor 44, a compensation circuit 45, a voltage-controlled oscillator (VCO) 46 and a second driver 47. The first driver 43 is configured to drive the first upper rectification switch $S_{R1}$ to the sixth lower rectification switch $S_{R1}2$ of the output switch group 3 to operate. The zero current detection circuit 41 is electrically connected to the secondary windings of the first transformer $T_1$, the second transformer $T_2$ and the third transformer $T_3$, and configured to detect the zero-crossing point of the output current in each phase of the three-phase LLC power conversion circuit 1. The gain control circuit 42 is configured to detect the input voltage $V_{in}$ received by the three-phase LLC power conversion circuit 1 and the output voltage $V_o$ outputted by the three-phase LLC power conversion circuit 1, and receives the detection result of the zero current detection circuit 41. The first driver 43 is controlled to drive the first upper rectification switch $S_{R1}$ to the sixth lower rectification switch $S_{R12}$ of the output switch group 3 according to the detection results of the input voltage $V_{in}$, the output voltage $V_o$ and the zero-crossing point of the output current in each phase, so as to perform synchronous rectification switching operation. The gain control circuit 42 further controls the switching state of at least one rectification switch of the synchronous rectification switch group in each phase of the output switch group 3 to lead or lag the switching state of the corresponding input switch of the input switch bridge in the same phase according to the ratio of the output voltage $V_o$ and the input voltage $V_{in}$. (i.e., the input switch is corresponding to the at least one rectification switch to lead or lag at turned on phase angle), and/or adjusts all input switches in each input switch bridge of the input switch group 2 to increase a duty cycle, so that the ratio of the output voltage $V_o$ to the input voltage $V_{in}$ is increased. The subtractor 44 is configured to perform a subtraction operation on the output voltage $V_o$ and the reference voltage $V_{ref}$. The compensation circuit 45 is configured to receive the soft switch setting condition and the operation result of the subtractor 44, and output a compensation signal according to the soft switching setting condition and the calculation result of the subtractor 44. The voltage-controlled oscillator 46 generates a switching signal having frequencies of the first upper input switch $Q_1$ to the third lower input switch $Q_6$ according to the compensation signal. The second driver 47 is configured to drive the first upper input switch $Q_1$ to the third lower input switch $Q_6$ of the input switch group 2 to perform soft switching according to the switching signal.

Please refer to FIG. 1 again. The control method of the present disclosure includes the following steps.

In a step S1, the control unit 4 detects each zero-crossing point of the input voltage $V_{in}$ received by the three-phase LLC power conversion circuit 1, the output voltage $V_o$ outputted by the three-phase LLC power conversion circuit 1 and the output current in each phase of the three-phase LLC power conversion circuit 1.

In a step S2, based on detection results of the input voltage $V_{in}$, the output voltage $V_o$ and the output current in each phase of the three-phase LLC power conversion circuit 1, the control unit 4 controls the first upper input switch $Q_1$ to the third lower input switch $Q_6$ of the input switch group 2 to perform switching operation, and controls the first upper rectification switch $S_{R1}$ to the sixth lower rectification switch $S_{R12}$ of the output switch group 3 to perform synchronous rectification switching operation. Moreover, according to a ratio of the output voltage $V_o$ and the input voltage $V_{in}$, the control unit 4 further controls a switching state of at least one rectification switch of the synchronous rectification switch group in each phase of the output switch group 3 to lead or lag the corresponding input switch in the input switch bridge with the same phase, and/or adjusts all input switches in each input switch bridge of the input switch group 2 to increase a duty cycle, so that the ratio of the output voltage $V_o$ to the input voltage $V_{in}$ is increased. In addition, the control unit 4 further adjusts the switching frequencies of all input switches in the input switch group 2 according to the output voltage $V_o$, the reference voltage $V_{ref}$ and the soft switching setting condition, so that all input switches of the input switch group 2 perform soft switching.

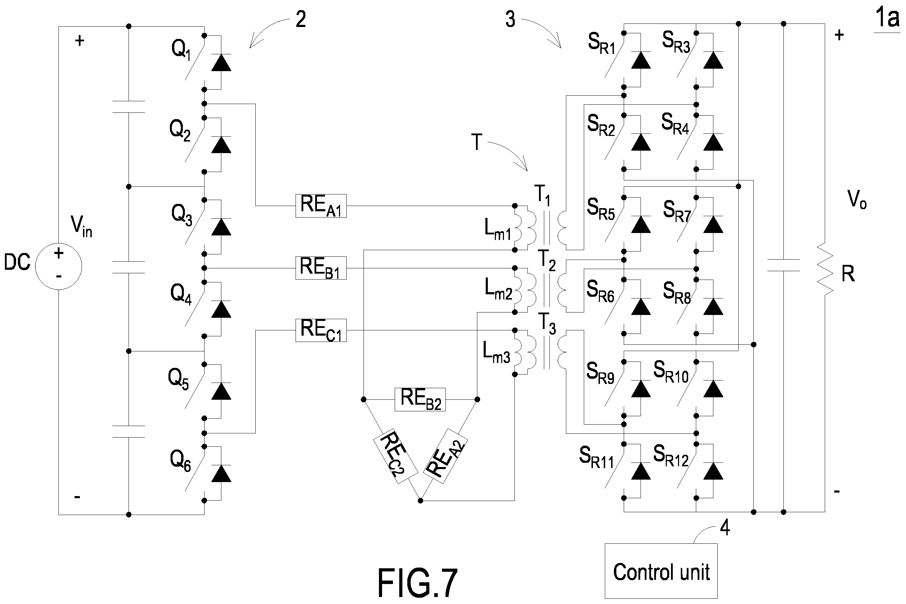

FIG. 7 is a schematic diagram of a circuit topology of a three-phase LLC power conversion circuit according to a second embodiment of the present disclosure. In the embodiment, the structures, elements and functions of the three-phase LLC power conversion circuit 1a are similar to those of the three-phase LLC power conversion circuit 1 in FIG. 2, and are not redundantly described herein. In the embodiment, the first upper input switch $Q_1$, the first lower input switch $Q_2$, the second upper input switch $Q_3$, the second lower input switch $Q_4$, the third upper input switch $Q_5$ and the third lower input switch $Q_6$ in the input switch group 2 of the three-phase LLC power conversion circuit 1a are electrically connected in a cascade manner.

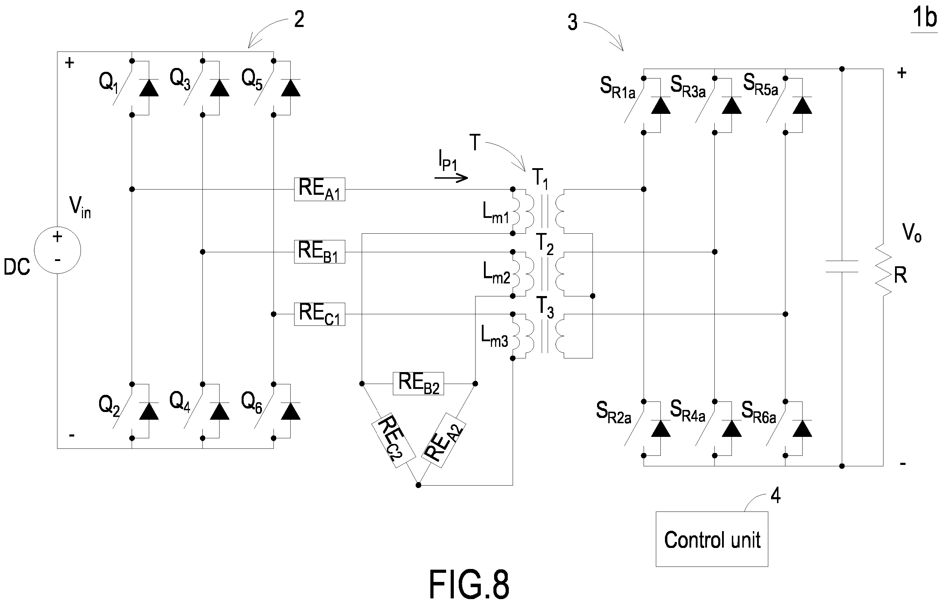

FIG. 8 is a schematic diagram of a circuit topology of a three-phase LLC power conversion circuit according to a third embodiment of the present disclosure. In the embodiment, the structures, elements and functions of the three-phase LLC power conversion circuit 1b are similar to those of the three-phase LLC power conversion circuit 1 in FIG. 2, and are not redundantly described herein. In the embodiment, the first synchronous rectification switch group of the output switch group 3 in the three-phase LLC power conversion circuit 1b is changed to include a first upper rectification switch $S_{R1a}$ and a first lower rectification switch $S_{R2a}$ connected in series to form a half-bridge topology. The second synchronous rectification switch group of the output switch group 3 in the three-phase LLC power conversion circuit 1b is changed to include a second upper rectification switch $S_{R3a}$ and a second lower rectification switch $S_{R4a}$ connected in series to form a half-bridge topology. The third synchronous rectification switch group of the output switch group 3 in the three-phase LLC power conversion circuit 1b is changed to include a third upper rectification switch $S_{R5a}$ and a third lower rectification switch $S_{R6a}$ connected in series to form a half-bridge topology.

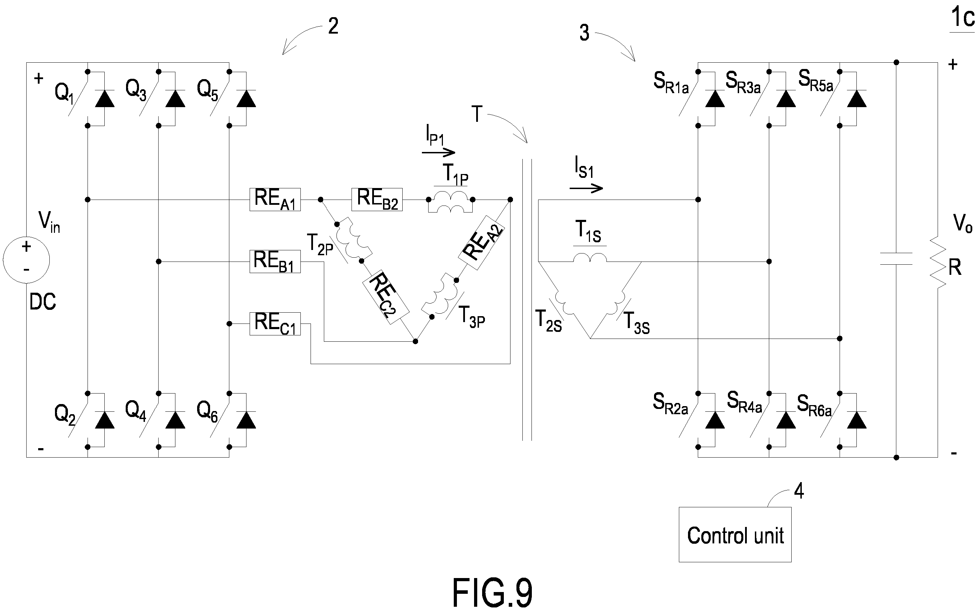

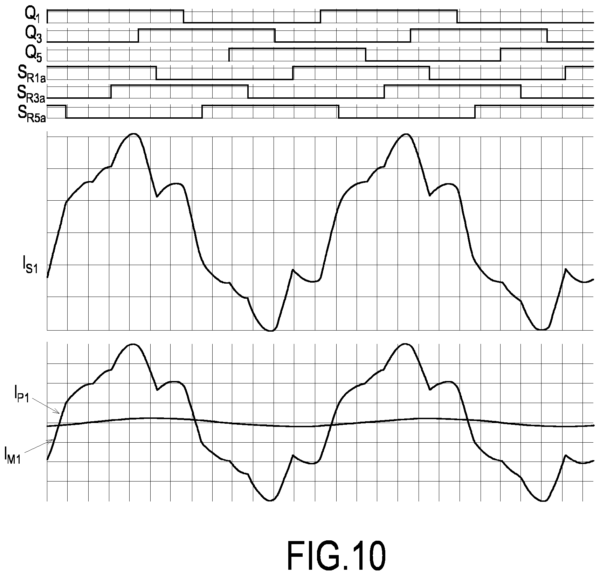

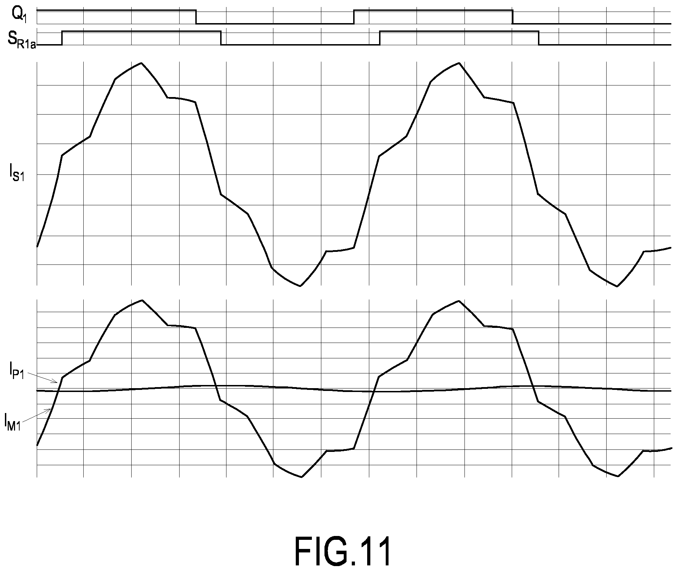

Please refer to FIG. 9, FIG. 10 and FIG. 11. FIG. 9 is a schematic diagram of a circuit topology of a three-phase LLC power conversion circuit according to a fourth embodiment of the present disclosure. FIG. 10 and FIG. 11 show the operating waveforms of the three-phase LLC power conversion circuit when the control unit of the three-phase LLC power conversion circuit is performed in different implementation modes. In the embodiment, the structures, elements and functions of the three-phase LLC power conversion circuit 1c are similar to those of the three-phase LLC power conversion circuit 1b in FIG. 8, and are not redundantly described herein. In the embodiment, the plurality of primary windings $T_{1p}$, $T_{2p}$, $T_{3p}$ of the three-phase transformer T in the three-phase LLC power conversion circuit 1c are delta-connected (i.e., △ connection), and the plurality of secondary windings $T_{1s}$, $T_{2s}$, $T_{3s}$ are delta-connected (i.e., △ connection).

As shown in FIG. 10 , the control unit 4 controls the switching state of at least one rectification switch of the synchronous rectification switch group in each phase of the output switch group 3 to lead the switching state of the corresponding input switch in the input switch bridge in the same phase according to the ratio of the output voltage $V_o$ and the input voltage $V_{in}$ (i.e., the switching states of the first upper rectification switch $S_{R1a}$, the second upper rectification switch $S_{R3a}$, and the third upper rectification switch $S_{R5a}$ lead the switching states of the first upper input switch $Q_1$, the second upper input switch $Q_3$ and the third upper input switch $Q_5$, respectively.) As shown in FIG. 11, the control unit 4 is changed to control at least one rectification switch of the synchronous rectification switch group in each phase of the output switch group 3 to perform synchronous operation according to a ratio of the output voltage $V_o$ and the input voltage $V_{in}$, and control the switching state of at least one remaining rectification switch of the synchronous rectification switch group in each phase of the output switch group 3 to lag the switching state of the corresponding input switch in the same phase of the input switch bridge (i.e., the switching state of the first upper rectification switch $S_{R1a}$ lags the switching state of the first upper input switch $Q_1$).

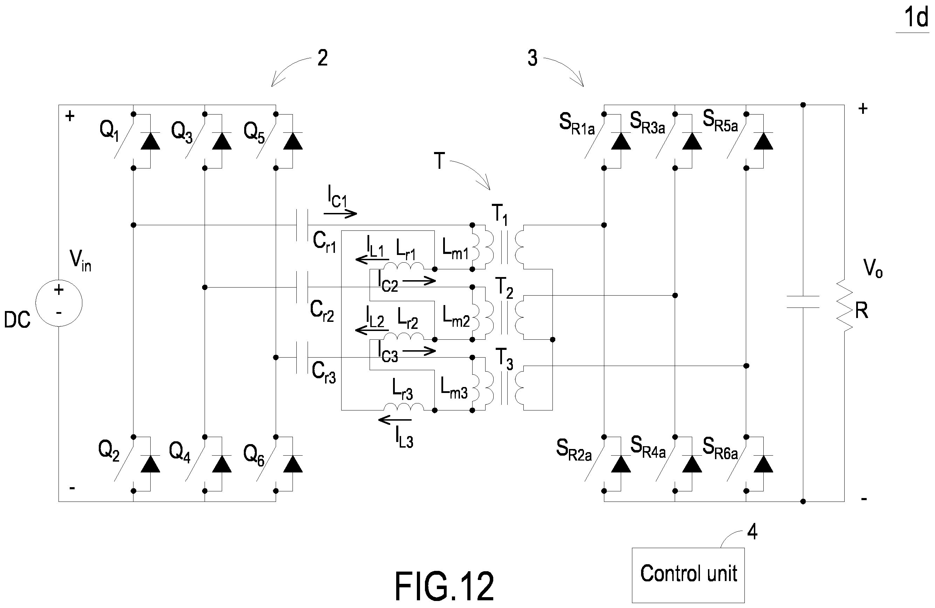

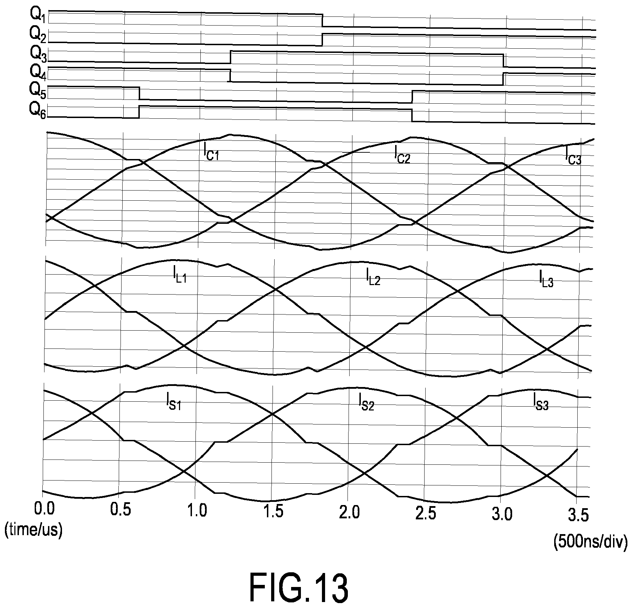

Please refer to FIG. 12 and FIG. 13. FIG. 12 is a schematic diagram of a circuit topology of a three-phase LLC power conversion circuit according to a fifth embodiment of the present disclosure. FIG. 13 shows the operating waveforms of the three-phase LLC power conversion circuit when the control unit of the three-phase LLC power conversion circuit is operated. In the embodiment, the three-phase LLC power conversion circuit 1d shows the detailed circuit topology of the three-phase LLC power conversion circuit 1b shown in FIG. 8. The plurality of first resonant elements $RE_{A1}$, $ER_{B1}$, $RE_{C1}$ in the three-phase LLC power conversion circuit 1c shown in FIG. 8 are star-connected (i.e., Y-connected) and can be respectively formed by capacitors $C_{r1}$, $C_{r2}$, $C_{r3}$, as shown in FIG. 12. The plurality of second resonant elements $RE_{A2}$, $ER_{B2}$, $RE_{C3}$ are delta-connected (i.e., △ connection) and can be respectively formed by resonant inductors $L_{r1}$, $L_{r2}$, $L_{r3}$. Symbol $I_{c1}$, $I_{c2}$, $I_{c3}$ are the currents flowing through the capacitors $C_{r1}$, $C_{r2}$, $C_{r3}$, respectively. Symbol $I_{L1}$, $I_{L2}$, $I_{L3}$ are the currents flowing through resonant inductors $L_{r1}$, $L_{r2}$, $L_{r3}$, respectively. Symbol $I_{s1}$, $I_{s2}$, $I_{s3}$ are the currents flowing through the secondary windings of the first transformer $T_1$, the second transformer $T_2$, the third transformer $T_3$, respectively.

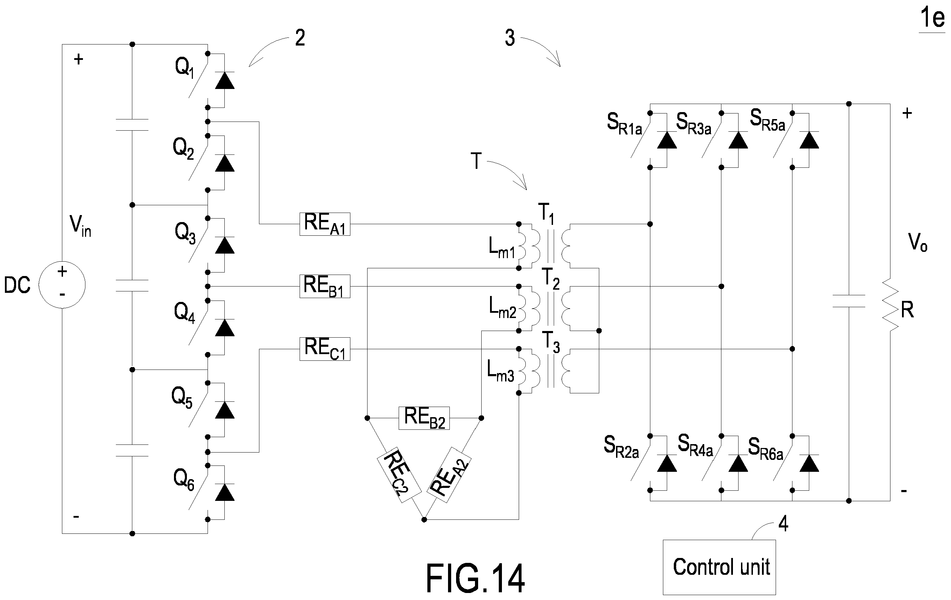

FIG. 14 is a schematic diagram of a circuit topology of a three-phase LLC power conversion circuit according to a sixth embodiment of the present disclosure. In the embodiment, the structures, elements and functions of the three-phase LLC power conversion circuit 1e are similar to those of the three-phase LLC power conversion circuit 1b in FIG. 8, and are not redundantly described herein. In the embodiment, the first upper input switch $Q_1$, the first lower input switch $Q_2$, the second upper input switch $Q_3$, the second lower input switch $Q_4$ and the third upper input switch $Q_5$ and the third lower input switch $Q_6$ in the input switch group 2 of the three-phase LLC power conversion circuit 1e are electrically connected in a cascade manner.

From the above, it can be seen that the input switch group 2 of the three-phase LLC power conversion circuit can be one of the circuit topology of the input switch group 2 of the three-phase LLC power conversion circuit 1 shown in FIG. 2 and the circuit topology of the input switch group 2 of the three-phase LLC power conversion circuit 1a shown in FIG. 7. Moreover, the output switch group 3 of the three-phase LLC power conversion circuit can be one of the circuit topology of the output switch group 3 of the three-phase LLC power conversion circuit 1 shown in FIG. 2 and the circuit topology of the output switch group 3 of the three-phase LLC power conversion circuit 1b shown in FIG. 8. Preferably but not exclusively, the plurality of first resonant elements $RE_{A1}$, $RE_{B1}$, $RE_{C1}$ are star-connected (i.e., Y-connected) or delta-connected (i.e., $\triangle$ connection), and respectively formed by capacitors or respectively formed by resonant inductors. Preferably but not exclusively, the plurality of second resonant elements $RE_{A2}$, $RE_{B2}$, $RE_{C2}$ are star-connected (i.e., Y-connected) or delta-connected (i.e., $\triangle$ connection), and respectively formed by capacitors or respectively formed by resonant inductors. It is noted that the circuit topologies of the input switch group 2, the output switch group 3 and the resonant circuit group are not limited to the above-mentioned embodiments, and can be varied according to the practical requirements.

In some embodiments, the control unit 4 of the three-phase LLC power conversion circuit can perform at least one of the aforementioned control methods. The control unit 4 can be preset by the user to perform at least one of the aforementioned control methods according to the practical requirements.

In order to improve the three-phase transformer (e.g., the three-phase transformer T shown in FIG. 2) and the three-phase resonant inductor (e.g., the second inductor shown in FIG. 2) in the three-phase LLC power conversion circuit of the above-mentioned embodiments, the magnetic flux of the resonant elements $RE_{A2}$, $RE_{B2}$, $RE_{C2}$ is cancelled out to improve the core loss and reduce the volume. In the present disclosure, the three-phase transformer is matched with the resonant inductor in the resonant element to achieve the magnetic flux cancellation, thereby achieving the above purposes. Different implementations of arrangement positions of the three-phase transformer and the three-phase resonant inductor in the three-phase LLC power conversion circuit are illustrated in the following. The marks of A, B, C in the following descriptions represent a first phase A, a second phase B, and a third phase C of the three phases, respectively. The first phase A is 120 degrees leading to the second phase B, the second phase B is 120 degrees leading to the third phase B, and the third phase C is 120 degrees leading to the first phase A.

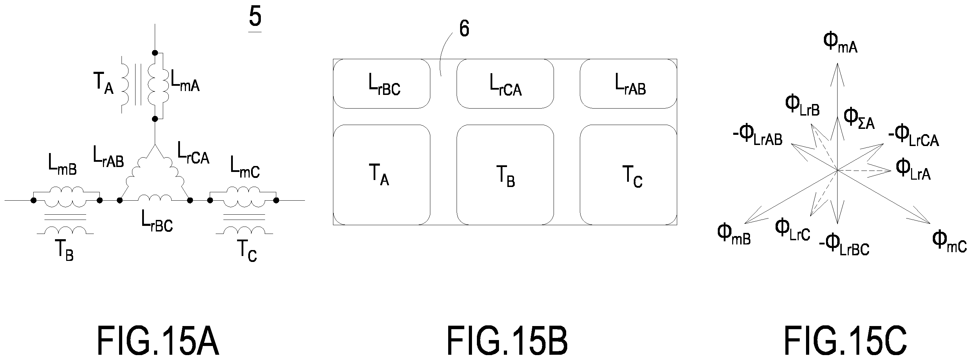

Please refer to FIG. 15A, FIG. 15B and FIG. 15C. FIG. 15A is a circuit diagram of a magnetic component for a three-phase LLC power conversion circuit according to a first embodiment of the present disclosure. FIG. 15B is a schematic diagram showing the arrangement positions of the three-phase transformer and the three-phase resonant inductor of the magnetic component shown in FIG. 15A. FIG. 15C is a schematic diagram showing a partial magnetic flux vector of the magnetic component shown in FIG. 15B. In the embodiment, the magnetic component 5 includes a three-phase transformer, a three-phase resonant inductor and a magnetic core set. The magnetic core set includes a single magnetic core 6. The three-phase transformer includes a first transformer $T_A$, a second transformer $T_B$ and a third transformer Tc. The primary windings of the first transformer $T_A$, the second transformer $T_B$ and the third transformer Tc are star-connected (i.e., Y-connected). The three-phase resonant inductor includes a first resonant inductor $L_{rBC}$ (BC phase inductor), a second resonant inductor $L_{rCA}$ (CA phase inductor) and a third resonant inductor $L_{rAB}$ (AB phase inductor), which are respectively electrically connected to the primary windings of the corresponding transformers in the first transformer $T_A$, the second transformer $T_B$ and the third transformer Tc. Furthermore, the first resonant inductor $L_{rBC}$, the second resonant inductor $L_{rCA}$ and the third resonant inductor $L_{rAB}$ are delta-connected in a triangle (i.e., $\triangle$ connection). In some embodiments, the three-phase transformer further includes a first magnetizing inductor $L_{mA}$, a second magnetizing inductor $L_{mB}$ and a third magnetizing inductor $L_{mC}$, which are respectively connected in parallel with the primary windings of corresponding transformers in the first transformer $T_A$, the second transformer $T_B$ and the third transformer Tc.

In the magnetic component 5, the first resonant inductor $L_{rBC}$, the second resonant inductor $L_{rCA}$ and the third resonant inductor $L_{rAB}$ are arranged horizontally adjacent to a first side of the magnetic core 6, and the first transformer $T_A$, the second transformer $T_B$ and the third transformer Tc are horizontally disposed close to a second side of the magnetic core 6. The first side is opposite to the second side. In addition, when the ratio of the inductance of the resonant inductor to the inductance of the corresponding magnetizing inductor is greater than a set value, such as 10, the resonant inductor and the transformer located of different phases are disposed close to each other. That is, the first transformer $T_A$ is disposed horizontally adjacent to the first resonant inductor $L_{rBC}$, the second transformer $T_B$ is disposed horizontally adjacent to the second resonant inductor $L_{rCA}$, and the third transformer Tc is disposed horizontally adjacent to the third resonant inductor $L_{rAB}$. In addition, the phase angle between the magnetic flux direction of the adjacent resonant inductor and the magnetic flux direction of the transformer is greater than 90 degrees and less than 270 degrees. Since the resonant inductor and the transformer disposed side-by-side are arranged horizontally, the winding direction of the resonant inductor is opposite to the winding direction of the adjacent transformer.

In FIG. 15C, it shows the magnetic fluxes $\Phi_{LrBC}$, $\Phi_{LrCA}$, $\Phi_{LrAB}$ of the first resonant inductor $L_{rBC}$, the second resonant inductor $L_{rCA}$ and the third resonant inductor $L_{rAB}$, respectively, shows the magnetic fluxes $\Phi_{mA}$, $\Phi_{mB}$, $\Phi_{mC}$ of the first transformer $T_A$, the second transformer $T_B$ and the third transformer Tc, and also shows the magnetic fluxes $\Phi_{LrA}$, $\Phi_{LrB}$, $\Phi_{LrC}$ of the resonant inductor in phase A, phase B and phase C, respectively. By configuring the arrangement positions of the first transformer $T_A$, the second transformer $T_B$ and the third transformer Tc, and the arrangement positions of the first resonant inductor $L_{rBC}$, the second resonant inductor $L_{rCA}$ and the third resonant inductor $L_{rAB}$, the resonant inductor and the transformer disposed side-by-side can achieve magnetic flux cancellation. For example, the magnetic flux of the first transformer $T_A$ is partially cancelled out by the magnetic flux of the first resonant inductor $L_{rBC}$ to form the total magnetic flux $\Phi_{\Sigma A}$ of the A phase, thereby improving the loss of the magnetic core 6 and reducing the volume of the magnetic core 6.

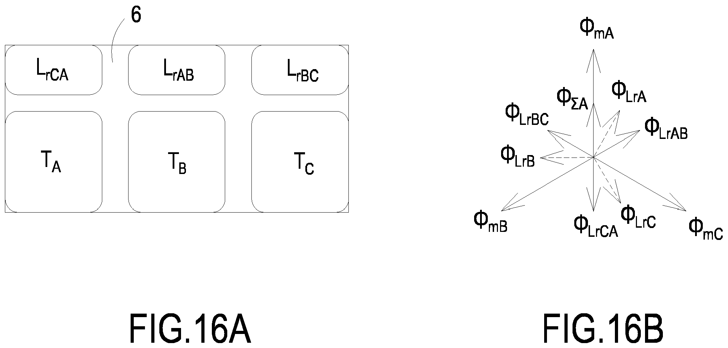

Please refer to FIG. 16A and FIG. 16B. FIG. 16A is a schematic diagram showing another example of the arrangement positions of the three-phase transformer and the three-phase resonant inductor of the magnetic component shown in FIG. 15A. FIG. 16B is a schematic diagram showing a partial magnetic flux vector of the magnetic component shown in FIG. 16A. In some embodiments, when the ratio of the inductance of the resonant inductor to the inductance of the corresponding magnetizing inductor is less than a set value, the resonant inductor and the transformer of the same phase are disposed close to each other. That is, the first transformer $T_A$ is arranged horizontally adjacent to the second resonant inductor $L_{rCA}$, the second transformer $T_B$ is arranged horizontally adjacent to the third resonant inductor $L_{rAB}$, and the third transformer Tc is arranged horizontally adjacent to the first resonant inductor $L_{rBC}$. In addition, the phase angle between the magnetic flux direction of the resonant inductor and the magnetic flux direction of the adjacent transformer arranged is greater than 90 degrees and less than 270 degrees. Since the resonant inductor and the transformer disposed side-by-side are arranged horizontally, the winding direction of the resonant inductor is opposite to the winding direction of the adjacent transformer.

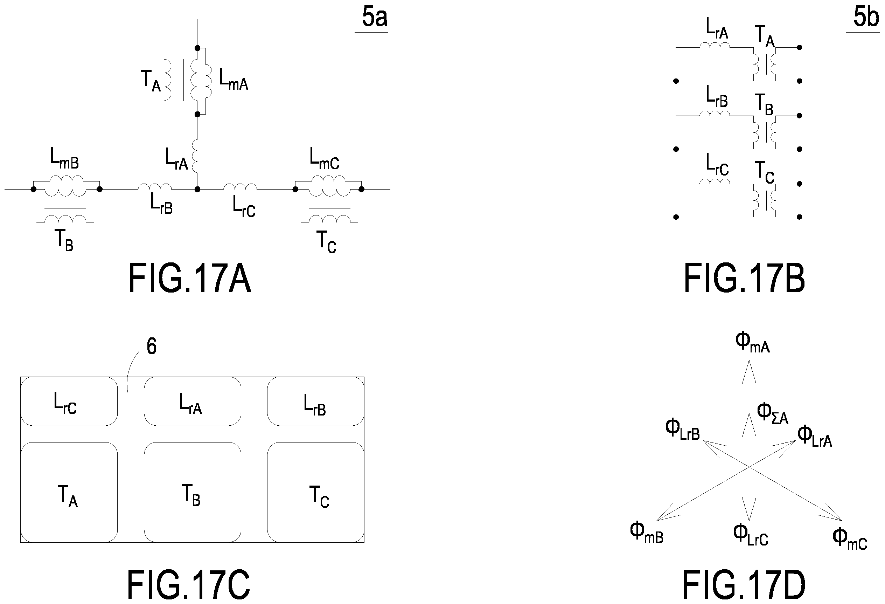

Please refer to FIG. 17A, FIG. 17B, FIG. 17C and FIG. 17D. FIG. 17A is a circuit diagram of a magnetic component for a three-phase LLC power conversion circuit according to a second embodiment of the present disclosure. FIG. 17B is a circuit diagram of a magnetic component for a three-phase LLC power conversion circuit according to a third embodiment of the present disclosure. FIG. 17C is a schematic diagram showing the arrangement positions of the three-phase transformer and the three-phase resonant inductor of the magnetic component shown in FIG. 17A or FIG. 17B. FIG. 17D is a schematic diagram showing a partial magnetic flux vector of the magnetic component shown in FIG. 17C. In the magnetic component 5a shown in FIG. 17A, the primary windings of the first transformer $T_A$, the second transformer $T_B$ and the third transformer Tc of the three-phase transformer are star-connected (i.e., Y-connected). The first resonant inductor $L_{rA}$, the second resonant inductor $L_{rB}$ and the third resonant inductor $L_{rC}$ of the three-phase resonant inductor are electrically connected to the primary windings of the corresponding transformers in the first transformer $T_A$, the second transformer $T_B$ and the third transformer Tc respectively. Furthermore, the first resonant inductor $L_{rA}$, the second resonant inductor $L_{rB}$ and the third resonant inductor $L_{rC}$ are star-connected (i.e., Y-connected).

In the magnetic component 5b shown in FIG. 17B, the first transformer $T_A$, the second transformer $T_B$ and the third transformer Tc of the three-phase transformer are independent and have a phase difference of 120 degrees. The first resonant inductor $L_{rA}$, the second resonant inductor $L_{rB}$ and the third resonant inductor $L_{rC}$ of the three-phase resonant inductor are independent and have a phase difference of 120 degrees. The first resonant inductor $L_{rA}$, the second resonant inductor $L_{rB}$ and the third resonant inductor $L_{rC}$ are electrically connected to the primary windings of the corresponding transformers in the first transformer $T_A$, the second transformer $T_B$ and the third transformer Tc, respectively.

In the magnetic component 5a or the magnetic component 5b, the first resonant inductor $L_{rA}$, the second resonant inductor $L_{rB}$ and the third resonant inductor $L_{rC}$ are arranged horizontally adjacent to a first side of the magnetic core 6, and the first transformer $T_A$, the second transformer $T_B$ and the third transformer Tc are arranged horizontally adjacent to a second side of the magnetic core 6. The first side is opposite to the second side, and the resonant inductor and the transformer of different phases are disposed close to each other. That is, the first transformer $T_A$ is disposed horizontally adjacent to the third resonant inductor $L_{rC}$, the second transformer $T_B$ is disposed horizontally adjacent to the first resonant inductor $L_{rA}$, and the third transformer Tc is disposed horizontally adjacent to the second resonant inductor $L_{rB}$. In addition, the phase angle between the magnetic flux direction of the adjacent resonant inductor and the magnetic flux direction of the transformer is greater than 90 degrees and less than 270 degrees. Since the resonant inductor and the transformer disposed side-by-side are arranged horizontally, the winding direction of the adjacent resonant inductor is opposite to the winding direction of the transformer.

In FIG. 17D, it shows the magnetic fluxes $\Phi_{LrA}$, $\Phi_{LrB}$, $\Phi_{LrC}$ of the first resonant inductor $L_{rA}$, the second resonant inductor $L_{rB}$ and the third resonant inductor $L_{rC}$, respectively, and also shows the magnetic fluxes $\Phi_{mA}$, $\Phi_{mB}$, $\Phi_{mC}$ of the first transformer $T_A$, the second transformer $T_B$ and the third transformer Tc. By configuring the arrangement positions of the first transformer $T_A$, the second transformer $T_B$ and the third transformer Tc,

and the arrangement positions of the first resonant inductor $L_{rA}$, the second resonant inductor $L_{rB}$ and the third resonant inductor $L_{rC}$, the resonant inductor and the transformer disposed side-by-side can achieve magnetic flux cancellation. For example, the magnetic flux of the first transformer $T_A$ is partially cancelled out by the magnetic flux of the third resonant inductor $L_{rC}$ to form the total magnetic flux $\Phi_{\Sigma A}$ of the A phase, thereby improving the loss of the magnetic core 6 and reducing the volume of the magnetic core 6.

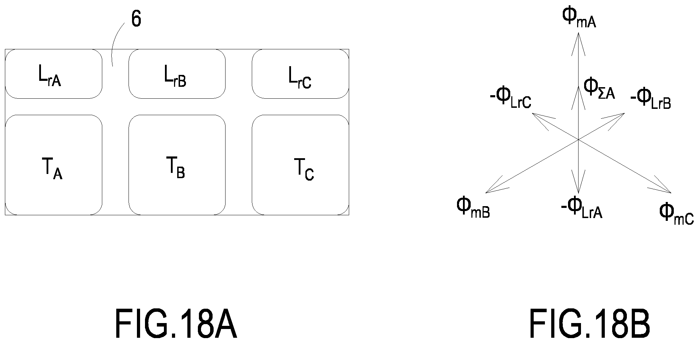

Please refer to FIG. 18A and FIG. 18B. FIG. 18A is a schematic diagram showing another example of the arrangement positions of the three-phase transformer and the three-phase resonant inductor of the magnetic component shown in FIG. 17A or FIG. 17B. FIG. 18B is a schematic diagram showing a partial magnetic flux vector of the magnetic component shown in FIG. 18A. In some embodiments, the resonant inductor and the transformer of the same phase are disposed close to each other. That is, the first transformer $T_A$ and the first resonant inductor $L_{rA}$ are arranged horizontally side-by-side. The second transformer $T_B$ is adjacent to the second resonant inductor $L_{rB}$. The third transformer Tc is arranged horizontally adjacent to the third resonant inductor $L_{rC}$. In addition, the phase angle between the magnetic flux direction of the resonant inductor and the magnetic flux direction of the adjacent transformer is greater than 90 degrees and less than 270 degrees. Since the resonant inductor and the transformer disposed side-by-side are arranged horizontally, the winding direction of the resonant inductor is opposite to the winding direction of the adjacent transformer.

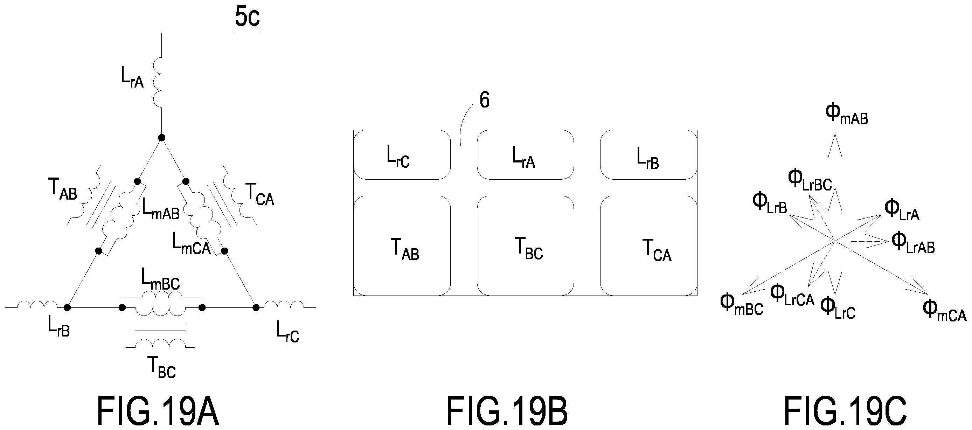

Please refer to FIG. 19A, FIG. 19B and FIG. 19C. FIG. 19A is a circuit diagram of a magnetic component for a three-phase LLC power conversion circuit according to a fourth embodiment of the present disclosure. FIG. 19B is a schematic diagram showing the arrangement positions of the three-phase transformer and the three-phase resonant inductor of the magnetic component shown in FIG. 19A. FIG. 19C is a schematic diagram showing a partial magnetic flux vector of the magnetic component shown in FIG. 19B. In the embodiment, the magnetic component 5c includes a three-phase transformer, a three-phase resonant inductor and a magnetic core 6. The three-phase transformer includes a first transformer $T_{AB}$, a second transformer $T_{BC}$ and a third transformer $T_{CA}$. The primary windings of the first transformer $T_{AB}$, the second transformer $T_{BC}$ and the third transformer $T_{CA}$ are delta-connected in a triangle (i.e., $\triangle$ connection). The three-phase resonant inductor includes a first resonant inductor $L_{rA}$, a second resonant inductor $L_{rB}$ and a third resonant inductor $L_{rC}$, which are respectively electrically connected to the primary windings of the corresponding two transformers in the first transformer $T_{AB}$, the second transformer $T_{BC}$ and the third transformer $T_{CA}$. Furthermore, the first resonant inductor $L_{rA}$, the second resonant inductor $L_{rB}$ and the third resonant inductor $L_{rC}$ are star-connected (i.e., Y-connected). In some embodiments, the three-phase transformer further includes a first magnetizing inductor $L_{mAB}$, a second magnetizing inductor $L_{mBC}$ and a third magnetizing inductor $L_{mCA}$, which are respectively connected in parallel with the primary windings of corresponding transformers in the first transformer $T_{AB}$, the second transformer $T_{BC}$ and the third transformer $T_{CA}$.

In the magnetic component 5c, the first resonant inductor $L_{rA}$, the second resonant inductor $L_{rB}$ and the third resonant inductor $L_{rC}$ are arranged horizontally adjacent to a first side of the magnetic core 6, and the first transformer $T_{AB}$, the second transformer $T_{BC}$ and the third transformer $T_{CA}$ are horizontally disposed close to a second side of the magnetic core 6. The first side is opposite to the second side. In the embodiment, the resonant inductor and the transformer of different phases are disposed close to each other. That is, the first transformer $T_{AB}$ and the third resonant inductor $L_{rC}$ are arranged horizontally and disposed side-by-side. The second transformer $T_{BC}$ is arranged horizontally adjacent to the first resonant inductor $L_{rA}$. The third transformer $T_{CA}$ is arranged horizontally adjacent to the second resonant inductor $Lr_B$. In addition, the phase angle between the magnetic flux direction of the adjacent resonant inductor and the magnetic flux direction of the transformer is greater than 90 degrees and less than 270 degrees. Since the resonant inductor and the transformer disposed side-by-side are arranged horizontally, the winding direction of the adjacent resonant inductor is opposite to the winding direction of the transformer.

In FIG. 19C, it shows the magnetic fluxes $\Phi_{LrA}$, $\Phi_{LrB}$, $\Phi_{LrC}$ of the first resonant inductor $L_{rA}$, the second resonant inductor $L_{rB}$ and the third resonant inductor $L_{rC}$, respectively, shows the magnetic fluxes $\Phi_{mAB}$, $\Phi_{mBC}$, $\Phi_{mCA}$ of the first transformer $T_{AB}$, the second transformer $T_{BC}$ and the third transformer $T_{CA}$, and also shows the magnetic fluxes $\Phi_{LrAB}$, $\Phi_{LrBC}$, $\Phi_{LrCA}$ of the resonant inductor in phase AB, phase BC and phase CA, respectively. By configuring the arrangement positions of the first transformer $T_{AB}$, the second transformer $T_{BC}$ and the third transformer $T_{CA}$, and the arrangement positions of the first resonant inductor $L_{rA}$, the second resonant inductor $L_{rB}$ and the third resonant inductor $L_{rC}$, the resonant inductor and the transformer disposed side-by-side can achieve magnetic flux cancellation. For example, the magnetic flux of the first transformer $T_{AB}$ is partially cancelled out by the magnetic flux of the third resonant inductor $L_{rC}$, thereby improving the loss of the magnetic core 6 and reducing the volume of the magnetic core 6.

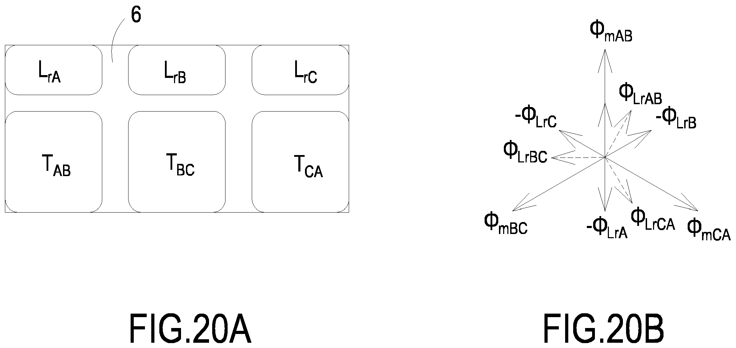

Please refer to FIG. 20A and FIG. 20B. FIG. 20A is a schematic diagram showing another example of the arrangement positions of the three-phase transformer and the three-phase resonant inductor of the magnetic component shown in FIG. 19A. FIG. 20B is a schematic diagram showing a partial magnetic flux vector of the magnetic component shown in FIG. 20A. In some embodiments, the resonant inductor and the transformer of the same phase are disposed close to each other. That is, the first transformer $T_{AB}$ and the first resonant inductor $L_{rA}$ are arranged horizontally and disposed side-by-side. The second transformer $T_{BC}$ is arranged horizontally adjacent to the second resonant inductor $L_{rB}$. The third transformer $T_{CA}$ is arranged horizontally adjacent to the third resonant inductor $L_{rC}$. In addition, the phase angle between the magnetic flux direction of the resonant inductor and the magnetic flux direction of the adjacent transformer is greater than 90 degrees and less than 270 degrees. Since the resonant inductor and the transformer disposed side-by-side are arranged horizontally, the winding direction of the resonant inductor is opposite to the winding direction of the adjacent transformer.

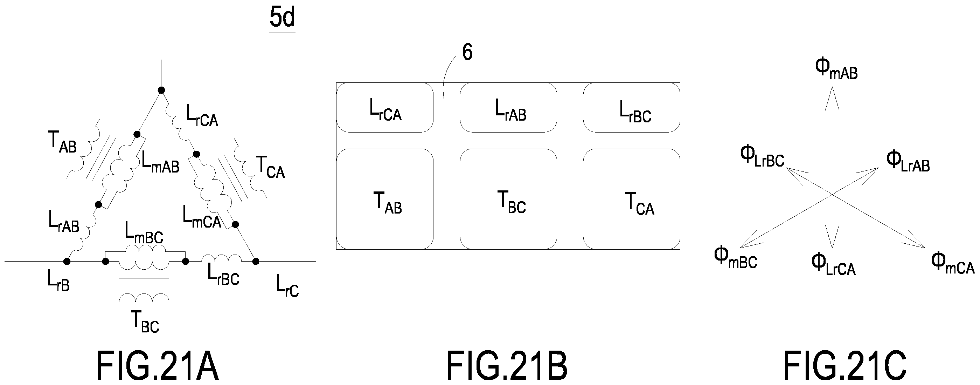

Please refer to FIG. 21A, FIG. 21B and FIG. 21C. FIG. 21A is a circuit diagram of a magnetic component for a three-phase LLC power conversion circuit according to a fifth embodiment of the present disclosure. FIG. 21B is a schematic diagram showing the arrangement positions of the three-phase transformer and the three-phase resonant inductor of the magnetic component shown in FIG. 21A. FIG. 21C is a schematic diagram showing a partial magnetic flux vector of the magnetic component shown in FIG. 21B. In the embodiment, the magnetic component 5d includes a three-phase transformer, a three-phase resonant inductor and a magnetic core 6. The three-phase transformer includes a first transformer $T_{AB}$, a second transformer $T_{BC}$ and a third transformer $T_{CA}$. The primary windings of the first transformer $T_{AB}$, the second transformer $T_{BC}$ and the third transformer $T_{CA}$ are delta-connected in a triangle (i.e., $\triangle$ connection). The three-phase resonant inductor includes a first resonant inductor $L_{rBA}$, a second resonant inductor $L_{rCA}$ and a third resonant inductor $L_{rAB}$, which are respectively electrically connected to the primary windings of the corresponding two transformers in the first transformer $T_{AB}$, the second transformer $T_{BC}$ and the third transformer $T_{CA}$. Furthermore, the first resonant inductor $L_{rBC}$, the second resonant inductor $L_{rCA}$ and the third resonant inductor $L_{rAB}$ are delta-connected in a triangle (i.e., $\triangle$ connection). In some embodiments, the three-phase transformer further includes a first magnetizing inductor $L_{mAB}$, a second magnetizing inductor $L_{mBC}$ and a third magnetizing inductor $L_{mCA}$, which are respectively connected in parallel with the primary windings of corresponding transformers in the first transformer $T_{AB}$, the second transformer $T_{BC}$ and the third transformer $T_{CA}$.

In the magnetic component 5d, the first resonant inductor $L_{rBC}$, the second resonant inductor $L_{rCA}$ and the third resonant inductor $L_{rAB}$ are arranged horizontally adjacent to a first side of the magnetic core 6, and the first transformer $T_{AB}$, the second transformer $T_{BC}$ and the third transformer $T_{CA}$ are horizontally disposed close to a second side of the magnetic core 6. The first side is opposite to the second side. In the embodiment, the resonant inductor and the transformer of different phases are disposed close to each other. That is, the first transformer $T_{AB}$ and the second resonant inductor $L_{rCA}$ are arranged horizontally and disposed side-by-side. The second transformer $T_{BC}$ is arranged horizontally adjacent to the third resonant inductor $L_{rAB}$. The third transformer $T_{CA}$ is arranged horizontally adjacent to the first resonant inductor Lrsc. In addition, the phase angle between the magnetic flux direction of the adjacent resonant inductor and the magnetic flux direction of the transformer is greater than 90 degrees and less than 270 degrees. Since the resonant inductor and the transformer disposed side-by-side are arranged horizontally, the winding direction of the adjacent resonant inductor is opposite to the winding direction of the transformer.

In FIG. 21C, it shows the magnetic fluxes $\Phi_{LrAB}$, $\Phi_{LrBC}$, $\Phi_{LrCA}$ of the third resonant inductor $L_{rAB}$, the first resonant inductor $L_{rBC}$ and the second resonant inductor $L_{rCA}$, respectively, and also shows the magnetic fluxes $\Phi_{mAB}$, $\Phi_{mBC}$, $\Phi_{mCA}$ of the first transformer $T_{AB}$, the second transformer $T_{BC}$ and the third transformer $T_{CA}$. By configuring the arrangement positions of the first transformer $T_{AB}$, the second transformer $T_{BC}$ and the third transformer $T_{CA}$, and the arrangement positions of the third resonant inductor $L_{rAB}$, the first resonant inductor $L_{rBC}$ and the second resonant inductor $L_{rCA}$, the resonant inductor and the transformer disposed side-by-side can achieve magnetic flux cancellation. For example, the magnetic flux of the first transformer $T_{AB}$ is partially cancelled out by the magnetic flux of the second resonant inductor $L_{rCA}$, thereby improving the loss of the magnetic core 6 and reducing the volume of the magnetic core 6.

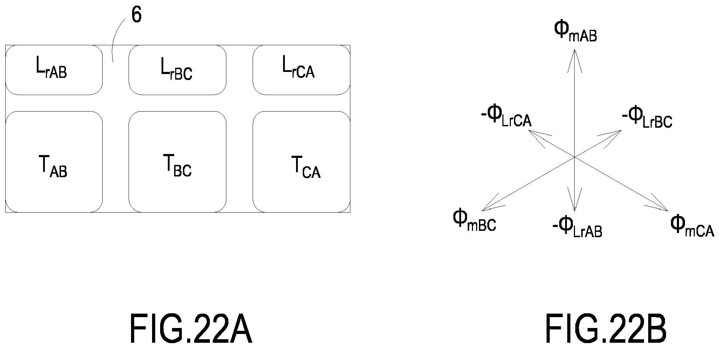

Please refer to FIG. 22A and FIG. 22B. FIG. 22A is a schematic diagram showing another example of the arrangement positions of the three-phase transformer and the three-phase resonant inductor of the magnetic component shown in FIG. 21A. FIG. 22B is a schematic diagram showing a partial magnetic flux vector of the magnetic component shown in FIG. 22A. In some embodiments, the resonant inductor and the transformer of the same phase are disposed close to each other. That is, the first transformer $T_{AB}$ and the third resonant inductor $L_{rAB}$ are arranged horizontally and disposed side-by-side. The second transformer $T_{BC}$ is adjacent to the first resonant inductor $L_{rBC}$. The third transformer $T_{CA}$ is arranged horizontally adjacent to the second resonant inductor $L_{rCA}$. In addition, the phase angle between the magnetic flux direction of the resonant inductor and the magnetic flux direction of the adjacent transformer is greater than 90 degrees and less than 270 degrees. Since the resonant inductor and the transformer disposed side-by-side are arranged horizontally, the winding direction of the resonant inductor is opposite to the winding direction of the adjacent transformer.

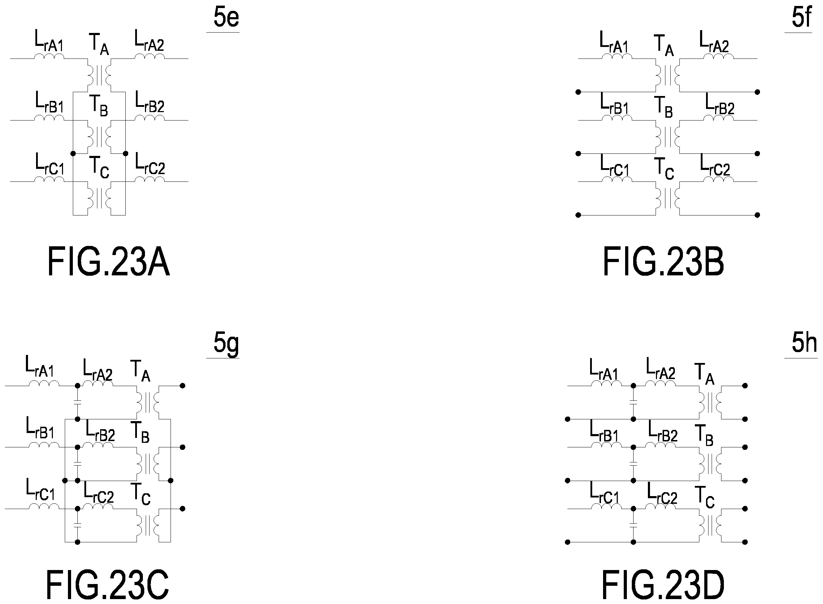

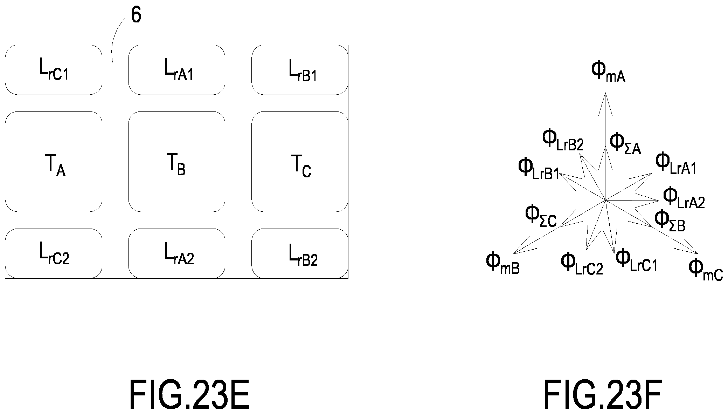

Please refer to FIG. 23A, FIG. 23B, FIG. 23C, FIG. 23D, FIG. 23E and FIG. 23F. FIG. 23A is a circuit diagram of a magnetic component for a three-phase LLC power conversion circuit according to a sixth embodiment of the present disclosure. FIG. 23B is a circuit diagram of a magnetic component for a three-phase LLC power conversion circuit according to a seven embodiment of the present disclosure. FIG. 23C is a circuit diagram of a magnetic component for a three-phase LLC power conversion circuit according to an eighth embodiment of the present disclosure. FIG. 23D is a circuit diagram of a magnetic component for a three-phase LLC power conversion circuit according to a ninth embodiment of the present disclosure. FIG. 23E is a schematic diagram showing the arrangement positions of the three-phase transformer and the three-phase resonant inductor of the magnetic component shown in FIG. 23A, FIG. 23B, FIG. 23C or FIG. 23D. FIG. 23F is a schematic diagram showing a partial magnetic flux vector of the magnetic component shown in FIG. 23E. The magnetic component 5e shown in FIG. 23A includes a three-phase transformer, a first three-phase resonant inductor, a second three-phase resonant inductor and a magnetic core 6. The primary windings of the first transformer $T_A$, the second transformer $T_B$ and the third transformer Tc of the three-phase transformer are star-connected (i.e., Y-connected). The secondary windings of the first transformer $T_A$, the second transformer $T_B$ and the third transformer Tc of the three-phase transformer are star-connected (i.e., Y-connected). The first three-phase resonant inductor includes a first resonant inductor $L_{rA1}$, a second resonant inductor $L_{rB1}$ and a third resonant inductor $L_{rC1}$. The first resonant inductor $L_{rA1}$, the second resonant inductor $L_{rB1}$ and the third resonant inductor $L_{rC1}$ are electrically connected to the primary windings of the corresponding transformers in the first transformer $T_A$ the second transformer $T_B$ and the third transformer Tc, respectively, and the first resonant inductor $L_{rA1}$, the second resonant inductor $L_{rB1}$ and the third resonant inductor $L_{rC1}$ are star-connected (i.e., Y-connected). The second three-phase resonant inductor includes a fourth resonant inductor $L_{rA2}$, a fifth resonant inductor $L_{rB2}$ and a sixth resonant inductor $L_{rC2}$. The fourth resonant inductor $L_{rA2}$, the fifth resonant inductor $L_{rB2}$ and the sixth resonant inductor $L_{rC2}$ are electrically connected to the secondary windings of the corresponding transformers in the first transformer $T_A$, the second transformer $T_B$ and the third transformer Tc, respectively. Furthermore, the fourth resonant inductor $L_{rA2}$, the fifth resonant inductor $L_{rB2}$ and the sixth resonant inductor $L_{rC2}$ are star-connected (i.e., Y-connected).

In the magnetic component 5f shown in FIG. 23B, the first transformer $T_A$, the second transformer $T_B$ and the third transformer Tc of the three-phase transformer are independent and have a phase difference of 120 degrees. The first resonant inductor $L_{rA1}$, the second resonant inductor $L_{rB1}$ and the third resonant inductor $L_{rC1}$ of the first three-phase resonant inductor are independent and have a phase difference of 120 degrees. Moreover, the first resonant inductor $L_{rA1}$, the second resonant inductor $L_{rB1}$ and the third resonant inductor $L_{rC1}$ are electrically connected to the primary windings of the corresponding transformers in the first transformer $T_A$, the second transformer $T_B$ and the third transformer Tc, respectively. The fourth resonant inductor $L_{rA2}$, the fifth resonant inductor $L_{rB2}$ and the sixth resonant inductor $L_{rC2}$ of the second three-phase resonant inductor are independent and have a phase difference of 120 degrees. The fourth resonant inductor $L_{rA2}$, the fifth resonant inductor $L_{rB2}$ and the sixth resonant inductor $L_{rC2}$ are electrically connected to the secondary windings of the corresponding transformers in the first transformer $T_A$, the second transformer $T_B$ and the third transformer Tc, respectively.

In the magnetic component 5g shown in FIG. 23C, the magnetic component 5g includes a three-phase transformer, a first three-phase resonant inductor, a second three-phase resonant inductor and a magnetic core 6. The primary windings of the first transformer $T_A$, the second transformer $T_B$ and the third transformer Tc of the three-phase transformer are star-connected (i.e., Y-connected). The first three-phase resonant inductor includes a first resonant inductor $L_{rA1}$, a second resonant inductor $L_{rB1}$ and a third resonant inductor $L_{rC1}$. The first resonant inductor $L_{rA1}$, the second resonant inductor $L_{rB1}$ and the third resonant inductor $L_{rC1}$ are electrically connected to the primary windings of the corresponding transformers in the first transformer $T_A$, the second transformer $T_B$ and the third transformer Tc, respectively. Furthermore, the first resonant inductor $L_{rA1}$, the second resonant inductor $L_{rB1}$, and the third resonant inductor $L_{rC1}$ are star-connected (i.e., Y-connected). The second three-phase resonant inductor includes a fourth resonant inductor $L_{rA2}$, a fifth resonant inductor $L_{rB2}$ and a sixth resonant inductor $L_{rC2}$. The fourth resonant inductor $L_{rA2}$, the fifth resonant inductor $L_{rB2}$ and the sixth resonant inductor $L_{rC2}$ are electrically connected between the corresponding one of the first resonant inductor $L_{rA1}$, the second resonant inductor $L_{rB1}$ and the third resonant inductor $L_{rC1}$ and the primary windings of the corresponding one of the first transformer $T_A$, the second transformer $T_B$ and the third transformer Tc. Furthermore, the fourth resonant inductor $L_{rA2}$, the fifth resonant inductor $L_{rB2}$ and the sixth resonant inductor $L_{rC2}$ are star-connected (i.e., Y-connected).

In the magnetic component 5h shown in FIG. 23D, the first transformer $T_A$, the second transformer $T_B$ and the third transformer Tc of the three-phase transformer are independent and have a phase difference of 120 degrees. The first resonant inductor $L_{rA1}$, the second resonant inductor $L_{rB1}$ and the third resonant inductor $L_{rC1}$ of the first three-phase resonant inductor are independent and have a phase difference of 120 degrees. The first resonant inductor $L_{rA1}$, the second resonant inductor $L_{rB1}$ and the third resonant inductor $L_{rC1}$ are electrically connected to the primary windings of corresponding transformers in the first transformer $T_A$, the second transformer $T_B$ and the third transformer Tc, respectively. The fourth resonant inductor $L_{rA2}$, the fifth resonant inductor $L_{rB2}$ and the sixth resonant inductor $L_{rC2}$ of the second three-phase resonant inductors are independent and have a phase difference of 120 degrees. The fourth resonant inductor $L_{rA2}$, the fifth resonant inductor $L_{rB2}$ and the sixth resonant inductor $L_{rC2}$ are respectively electrically connected between the corresponding one of the first resonant inductor $L_{rA1}$, the second resonant inductor $L_{rB1}$ and the third resonant inductor $L_{rC1}$ and the primary windings of corresponding one of the first transformer $T_A$, the second transformer $T_B$ and the third transformer Tc.

In the magnetic component 5e, the magnetic component 5f, the magnetic component 5g or the magnetic component 5h, the first resonant inductor $L_{rA1}$, the second resonant inductor $L_{rB2}$ and the third resonant inductor $L_{rC2}$ are arranged horizontally adjacent to the first side of the magnetic core 6. The fourth resonant inductor $L_{rA2}$, the fifth resonant inductor $L_{rB2}$ and the sixth resonant inductor $L_{rC2}$ are arranged horizontally adjacent to the second side of the magnetic core 6. The first transformer $T_A$, the second transformer $T_B$ and the third transformer Tc are horizontally arranged between the first side and the second side of the magnetic core 6, and located between the first three-phase resonant inductor and the second three-phase resonant inductor. The first side is opposite to the second side. In addition, the resonant inductor and the transformer of different phases are disposed close to each other. That is, the first transformer $T_A$ is arranged horizontally adjacent to the third resonant inductor $L_{rC1}$ and the sixth resonant inductor $L_{rC2}$. The second transformer $T_B$ is disposed horizontally adjacent to the first resonant inductor $L_{rA1}$ and the fourth resonant inductor $L_{rA2}$, and the third transformer Tc is disposed horizontally adjacent to the second resonant inductor $L_{rB1}$ and the fifth resonant inductor $L_{rB2}$. In addition, the phase angle between the magnetic flux direction of the resonant inductor and the magnetic flux direction of the adjacent transformer is greater than 90 degrees and less than 270 degrees. Since the resonant inductor and the transformer disposed side-by-side are arranged horizontally, the winding direction of the adjacent resonant inductor is opposite to the winding direction of the transformer.

In FIG. 23F, it shows the magnetic fluxes $\Phi_{LrA1}$, $\Phi_{LrB1}$, $\Phi_{LrC1}$, $\Phi_{LrA2}$, $\Phi_{LrB2}$, $\Phi_{LrC2}$ of the first resonant inductor $L_{rA1}$, the second resonant inductor $L_{rB1}$, the third resonant inductor $L_{rC1}$, the fourth resonant inductor $L_{rA2}$, the fifth resonant inductor $L_{rB2}$ and the sixth resonant inductor $L_{rC2}$, and also shows the magnetic fluxes $\Phi_{mA}$, $\Phi_{mB}$, $\Phi_{mC}$ of the first transformer $T_A$, the second transformer $T_B$, and the third transformer Tc. By configuring the arrangement positions of the first transformer $T_A$, the second transformer $T_B$ and the third transformer Tc and the arrangement positions of the first resonant inductor $L_{rA1}$, the second resonant inductor $L_{rB1}$, the third resonant inductor $L_{rC1}$, the fourth resonant inductor $L_{rA2}$, the fifth resonant inductor $L_{rB2}$ and the sixth resonant inductor $L_{rC2}$, the resonant inductor and the transformer disposed side-by-side can achieve magnetic flux cancellation. For example, the magnetic flux of the first transformer $T_A$ is partially cancelled out by the magnetic flux of the third resonant inductor $L_{rC1}$ and the magnetic flux of the sixth resonant inductor $L_{rC2}$ to form the total magnetic flux $\Phi_{\Sigma A}$ of the A phase. The magnetic flux of the second transformer $T_B$ is partially cancelled out by the magnetic flux of the first resonant inductor $L_{rA1}$ and the magnetic flux of the fourth resonant inductor $L_{rA2}$ to form the total magnetic flux $\Phi_{\Sigma B}$ of the B phase. The magnetic flux of the third transformer Tc is partially cancelled out by the magnetic flux of the second resonant inductor $L_{rB1}$ and the magnetic flux of the fifth resonant inductor $L_{rB2}$ to form the total magnetic flux $\Phi_{\Sigma C}$ of the C phase. Thereby, the loss of the magnetic core 6 can be improved and the volume of the magnetic core 6 can be reduced.

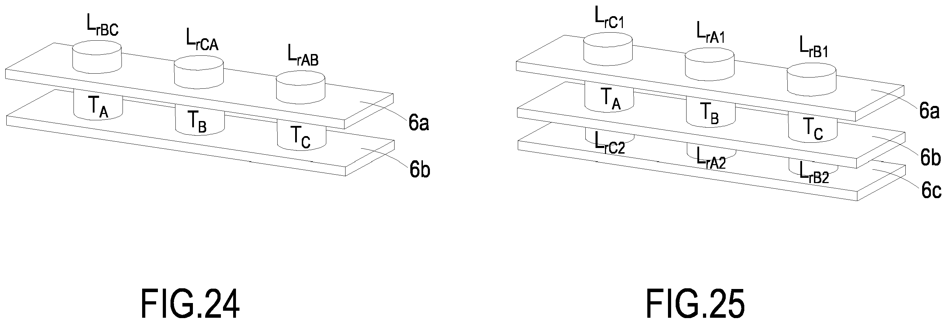

In the above embodiments, the three-phase transformer and the three-phase resonant inductor of the magnetic components may also be stacked and arranged vertically on the magnetic core set. Furthermore, the winding direction of the resonant inductor is the same as the winding direction of the adjacent transformer. Several possible implementations are listed below for exemplary explanation. FIG. 24 is a schematic diagram showing another example of the arrangement positions of the three-phase transformer and the three-phase resonant inductor of the magnetic component of the embodiment shown in FIG. 15A. As shown in FIG. 24, in the embodiment, the magnetic core set of the magnetic component includes a first magnetic core 6a and a second magnetic core 6b. The first magnetic core 6a is vertically disposed above the second magnetic core 6b. The first resonant inductor $L_{rBC}$, the second resonant inductor $L_{rCA}$ and the third resonant inductor $L_{rAB}$ are disposed on the first magnetic core 6a. The first transformer $T_A$, the second transformer $T_B$ and the third transformer Tc are arranged on the second magnetic core 6b. In addition, the resonant inductor and the transformer of different phases are disposed close to each other. That is, the first transformer $T_A$ and the first resonant inductor $L_{rBC}$ are arranged vertically and disposed side-by-side. The second transformer $T_B$ and the second resonant inductor $L_{rCA}$ are arranged vertically and disposed side-by-side. The third transformer Tc and the third resonant inductor $L_{rAB}$ are arranged vertically and disposed side-by-side. In addition, the phase angle between the magnetic flux direction of the resonant inductor and the magnetic flux direction of the adjacent transformer arranged vertically is between -90 degrees and +90 degrees, wherein the positive direction of the magnetic flux is from bottom to top. Furthermore, the winding direction of the resonant inductor is the same as the winding direction of the adjacent transformer.

FIG. 25 is a schematic diagram showing another example of the arrangement positions of the three-phase transformer and the three-phase resonant inductor of the magnetic component shown in FIG. 23E. As shown in FIG. 25, the circuit structure of the magnetic component of this embodiment is similar to the magnetic component 5e of FIG. 23A, the magnetic component 5f of FIG. 23B, the magnetic component 5g of FIG. 23C or the magnetic component 5h of FIG. 23D. In the embodiment, the magnetic core set of the magnetic component includes a first magnetic core 6a, a second magnetic core 6b and a third magnetic core 6c. The first magnetic core 6a is vertically arranged above the second magnetic core 6b. The second magnetic core 6b is vertically arranged above the third magnetic core 6c. The first resonant inductor $L_{rA1}$, the second resonant inductor $L_{rB1}$ and the third resonant inductor $L_{rC1}$ are disposed on the first magnetic core 6a. The first transformer $T_A$, the second transformer $T_B$ and the third transformer Tc are arranged on the second magnetic core 6b. The fourth resonant inductor $L_{rA2}$, the fifth resonant inductor $L_{rB2}$ and the sixth resonant inductor $L_{rC2}$ are disposed on the third magnetic core 6c. In addition, the resonant inductor and the transformer of different phases are disposed close to each other. That is, the first transformer $T_A$ is arranged vertically adjacent to the third resonant inductor $L_{rC1}$ and the sixth resonant inductor $L_{rC2}$. The second transformer $T_B$ is arranged vertically adjacent to the first resonant inductor $L_{rA1}$ and the fourth resonant inductor $L_{rA2}$. The third transformer Tc is arranged vertically adjacent to the second resonant inductor $L_{rB1}$ and the fifth resonant inductor $L_{rB2}$. In addition, the phase angle between the magnetic flux direction of the resonant inductor and the magnetic flux direction of the adjacent transformer arranged vertically is between -90 degrees and +90 degrees, wherein the positive direction of the magnetic flux is from bottom to top. Furthermore, the winding direction of the resonant inductor is the same as the winding direction of the adjacent transformer.

In summary, the present disclosure provides a three-phase power conversion circuit and a control method thereof for reducing the switching frequency range of the three-phase power conversion circuit, and achieving lower RMS current and peak current, and better magnetic integrations. In addition, since the control unit of the three-phase power conversion circuit controls the two control freedoms of phase-shaft and frequency, it can solve the increase of reactive current due to the change of resonant frequency, and the switch can perform soft-switching more accurately.

## Claims

1. A control method of a three-phase LLC power conversion circuit (1, 1a, 1b, 1c, 1d, 1e), wherein the three-phase LLC power conversion circuit (1, 1a, 1b, 1c, 1d, 1e) receives an input voltage ($V_{in}$) and outputs an output voltage ($V_o$), and comprises a three-phase transformer (T), an input switch group (2), an output switch group (3) and a resonant circuit group, the input switch group (2) is electrically connected to a plurality of primary windings ($T_{1p}$, $T_{2p}$, $T_{3p}$) of the three-phase transformer (T) and comprises a plurality of input switches ($Q_1$, $Q_2$, $Q_3$, $Q_4$, $Q_5$, $Q_6$), the output switch group (3) is electrically connected to a plurality of secondary windings ($T_{1s}$, $_{2s}$, $T_{3s}$) of the three-phase transformer (T) and comprises a plurality of rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$), the resonant circuit group is electrically connected between the input switch group (2) and the plurality of primary windings ($T_{1p}$, $T_{2p}$, $T_{3p}$), and **characterized in that** the control method comprises steps of:

   (S1) detecting each zero-crossing point of the input voltage ($V_{in}$), the output voltage ($V_o$) and each output current of the three-phase LLC power conversion circuit (1, 1a, 1b, 1c, 1d, 1e) in each phase; and
   (S2) controlling the plurality of input switches ($Q_1$, $Q_2$, $Q_3$, $Q_4$, $Q_5$, $Q_6$) to perform switching operation and controlling the plurality of rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) to perform synchronous rectification switching operation based on detection results of the step (S1), and controlling the output switch group (3) in each phase according to a ratio of the output voltage ($V_o$) to the input voltage ($V_{in}$), wherein a switching state of at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) is controlled to lead or lag a switching state of the corresponding input switch ($Q_1$, $Q_2$, $Q_3$, $Q_4$, $Q_5$, $Q_6$), and/or adjusting the plurality of input switches ($Q_1$, $Q_2$, $Q_3$, $Q_4$, $Q_5$, $Q_6$) in each phase to increase a duty cycle, so that the ratio of the output voltage ($V_o$) to the input voltage ($V_{in}$) is increased, wherein switching frequencies of the plurality of input switches ($Q_1$, $Q_2$, $Q_3$, $Q_4$, $Q_5$, $Q_6$) are adjusted according to the output voltage ($V_o$), a reference voltage ($V_{ref}$) and a soft switching setting condition, so that the plurality of input switches ($Q_1$, $Q_2$, $Q_3$, $Q_4$, $Q_5$, $Q_6$) perform soft switching.

2. The control method according to claim 1, wherein in the step (S2), the control method further comprises at least one of

   (1) the switching state of the at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase is controlled to lead the switching state of the corresponding input switch ($Q_1$, $Q_2$, $Q_3$, $Q_4$, $Q_5$, $Q_6$) in the same phase according to the ratio of the output voltage ($V_o$) to the input voltage ($V_{in}$), and the switching state of at least remaining one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase is controlled to lag the switching state of the corresponding input switch ($Q_1$, $Q_2$, $Q_3$, $Q_4$, $Q_5$, $Q_6$) in the same phase;

(2) the at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{12}$, $S_{R1a}$, $S_{R2a}$, $S_{R3a}$, $S_{R4a}$, $S_{R5a}$, $S_{R6a}$) in each phase is controlled to perform synchronous rectification switching operation, and the switching state of at least remaining one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase is controlled to lead the switching state of the corresponding input switch ($Q_1$, $Q_2$, $Q_3$, $Q_4$, $Q_5$, $Q_6$) in the same phase; and

(3) the at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase is controlled to perform synchronous rectification switching operation, and the switching state of at least remaining one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase is controlled to lag the switching state of the corresponding input switch ($Q_1$, $Q_2$, $Q_3$, $Q_4$, $Q_5$, $Q_6$) in the same phase.

3. The control method according to one of claims 1 and 2, wherein the plurality of input switches ($Q_1$, $Q_2$, $Q_3$, $Q_4$, $Q_5$, $Q_6$) comprise a first upper input switch ($Q_1$), a first lower input switch ($Q_2$), a second upper input switch ($Q_3$), a second lower input switch ($Q_4$), a third upper input switch ($Q_5$) and a third lower input switch ($Q_6$), wherein the first upper input switch ($Q_1$) is connected in series with the first lower input switch ($Q_2$) to form a first input switch bridge, the second upper input switch ($Q_3$) is connected in series with the second lower input switch ($Q_4$) to form a second input switch bridge, and the third upper input switch ($Q_5$) is connected in series with the third lower input switch ($Q_6$) to form a third input switch bridge, wherein the first input switch bridge, the second input switch bridge and the third input switch bridge are connected in parallel.

4. The control method according to one of claims 1 and 2, wherein the plurality of input switches ($Q_1$, $Q_2$, $Q_3$, $Q_4$, $Q_5$, $Q_6$) comprise a first upper input switch ($Q_1$), a first lower input switch ($Q_2$), a second upper input switch ($Q_3$), a second lower input switch ($Q_4$), a third upper input switch ($Q_5$) and a third lower input switch ($Q_6$), wherein the first upper input switch ($Q_1$) is connected in series with the first lower input switch ($Q_2$), the second upper input switch ($Q_3$) is connected in series with the second lower input switch ($Q_4$), and the third upper input switch ($Q_5$) is connected in series with the third lower input switch ($Q_6$),

wherein the first upper input switch ($Q_1$), the first lower input switch ($Q_2$), the second upper input switch ($Q_3$), the second lower input switch ($Q_4$), the third upper input switch ($Q_5$) and the third lower input switch ($Q_6$) are connected in a cascade manner.

5. The control method according to any one of the preceding claims, wherein the plurality of rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$) comprise a first upper rectification switch ($S_{R1}$), a first lower rectification switch ($S_{R2}$), a second upper rectification switch ($S_{R3}$), a second lower rectification switch ($S_{R4}$), a third upper rectification switch ($S_{R5}$), a third lower rectification switch ($S_{R6}$), and a fourth upper rectification switch ($S_{R7}$), a fourth lower rectification switch ($S_{R8}$), a fifth upper rectification switch ($S_{R9}$), a fifth lower rectification switch ($S_{R10}$), a sixth upper rectification switch ($S_{R11}$) and a sixth lower rectification switch ($S_{R12}$), wherein the first upper rectification switch ($S_{R1}$) and the first lower rectification switch ($S_{R2}$) are connected in series to form a first rectification bridge, the second upper rectification switch ($S_{R3}$) and the second lower rectification switch ($S_{R4}$) are connected in series to form a second rectification bridge, the first rectification bridge is connected in parallel with the second rectification bridge, wherein the third upper rectification switch ($S_{R5}$) and the third lower rectification switch ($S_{R6}$) are connected in series to form a third rectification bridge, the fourth upper rectification switch ($S_{R7}$) and the fourth lower rectification switch ($S_{R8}$) are connected in series to form a fourth rectification bridge, the third rectification bridge is connected in parallel with the fourth rectification bridge, wherein the fifth upper rectification switch ($S_{R9}$) and the fifth lower rectification switch ($S_{R10}$) are connected in series to form a fifth rectification bridge, the sixth upper rectification switch ($S_{R11}$) and the sixth lower rectification switch ($S_{R12}$) are connected in series to form a sixth rectification bridge, and the fifth rectification bridge is connected in parallel with the sixth rectification bridge.

6. The control method according to any one of the preceding claims, wherein the resonant circuit group comprises a plurality of first resonant elements ($RE_{A1}$, $RE_{B1}$, $RE_{C1}$) and a plurality of second resonant elements ($RE_{A2}$, $RE_{B2}$, $RE_{C2}$), the plurality of first resonant elements ($RE_{A1}$, $RE_{B1}$, $RE_{C1}$) are star-connected and respectively formed by an inductor or respectively formed by a capacitor, and the plurality of second resonant elements ($RE_{A2}$, $RE_{B2}$, $RE_{C2}$) are delta-connected and respectively formed by another inductor or respectively formed by another capacitor.

7. The control method according to any one of the preceding claims, wherein the plurality of primary windings ($T_{1p}$, $T_{2p}$, $T_{3p}$) of the three-phase transformer (T) are delta-connected, and the plurality of secondary windings ($T_{1s}$, $T_{2s}$, $T_{3s}$) of the three-phase transformer (T) are delta-connected.

8. A three-phase LLC power conversion circuit (1, 1a, 1b, 1c, 1d, 1e), configured to receive an input voltage ($V_{in}$) and output an output voltage ($V_o$), and **characterized by** comprising:

   an input switch group (2) configured to receive the input voltage ($V_{in}$) and comprising a plurality of input switches ($Q_1$, $Q_2$, $Q_3$, $Q_4$, $Q_5$, $Q_6$);
   a three-phase transformer (T) comprising a plurality of primary windings ($T_{1p}$, $T_{2p}$, $T_{3p}$) and a plurality of secondary windings ($T_{1s}$, $T_{2s}$, $T_{3s}$), wherein the input switch group (2) is electrically connected to the plurality of primary windings ($T_{1p}$, $T_{2p}$, $T_{3p}$);
   a resonant circuit group electrically connected between the input switch group (2) and the plurality of primary windings ($T_{1p}$, $T_{2p}$, $T_{3p}$), and comprising a plurality of first resonant elements ($RE_{A1}$, $RE_{B1}$, $RE_{C1}$) and a plurality of second resonant elements ($RE_{A2}$, $RE_{B2}$, $RE_{C2}$), wherein the plurality of first resonant elements ($RE_{A1}$, $RE_{B1}$, $RE_{C1}$) are star-connected and respectively formed by an inductor or respectively formed by a capacitor, and the plurality of second resonant elements ($RE_{A2}$, $RE_{B2}$, $RE_{C2}$) are delta-connected and respectively formed by another inductor or respectively formed by another capacitor; and
   an output switch group (3) electrically connected to the plurality of secondary windings ($T_{1s}$, $T_{2s}$, $T_{3s}$), comprising a plurality of rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) and configured to output the output voltage ($V_o$).

9. The three-phase LLC power conversion circuit (1, 1a, 1b, 1c, 1d, 1e) according to claim 8, further comprising a control unit (4) electrically connected to the input switch group (2) and the output switch group (3) for detecting each zero-crossing point of the input voltage ($V_{in}$), the output voltage ($V_o$) and each output current of the three-phase LLC power conversion circuit (1, 1a, 1b, 1c, 1d, 1e) in each phase, wherein the plurality of input switches ($Q_1$, $Q_2$, $Q_3$, $Q_4$, $Q_5$, $Q_6$) are controlled to perform switching operation based on detection results, the plurality of rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) are controlled to perform synchronous rectification switching operation, and the output switch group (3) in each phase is controlled according to a ratio of the output voltage ($V_o$) to the input voltage ($V_{in}$), wherein a switching state of at least one of the rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) is controlled to lead or lag a switching state of the corresponding input switch ($Q_1$, $Q_2$, $Q_3$, $Q_4$, $Q_5$, $Q_6$), and/or the plurality of input switches ($Q_1$, $Q_2$, $Q_3$, $Q_4$, $Q_5$, $Q_6$) in each phase are adjusted to increase a duty cycle, so that the ratio of the output voltage ($V_o$) to the input voltage ($V_{in}$) is increased, wherein switching frequencies of the plurality of input switches ($Q_1$, $Q_2$, $Q_3$, $Q_4$, $Q_5$, $Q_6$) are adjusted according to the output voltage ($V_o$), a reference voltage ($V_{ref}$) and a soft switching setting condition, so that the plurality of input switches ($Q_1$, $Q_2$, $Q_3$, $Q_4$, $Q_5$, $Q_6$) perform soft switching.

10. The three-phase LLC power conversion circuit (1, 1a, 1b, 1c, 1d, 1e) according to claim 9, wherein the control unit (4) is configured to perform at least one of

   (1) controlling the switching state of the at least one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase to lead the switching state of the corresponding input switch ($Q_1$, $Q_2$, $Q_3$, $Q_4$, $Q_5$, $Q_6$) in the same phase according to the ratio of the output voltage ($V_o$) to the input voltage ($V_{in}$), and controls the switching state of at least remaining one of the rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase to lag the switching state of the corresponding input switch ($Q_1$, $Q_2$, $Q_3$, $Q_4$, $Q_5$, $Q_6$) in the same phase;
   (2) controlling the at least one of the rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase to perform synchronous rectification switching operation, and controls the switching state of at least remaining one of the rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase to lead the switching state of the corresponding input switch ($Q_1$, $Q_2$, $Q_3$, $Q_4$, $Q_5$, $Q_6$) in the same phase; and
   (3) controlling the at least one of the rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$, $S_{R11}$, $S_{R12}$, $S_{R1a}$, $S_{R2a}$, $S_{R3a}$, $S_{R4a}$, $S_{R5a}$, $S_{R6a}$) in each phase to perform synchronous rectification switching operation, and controls the switching state of at least remaining one of the rectification switches ($S_{R1}$, $S_{R2}$, $S_{R3}$, $S_{R4}$, $S_{R5}$, $S_{R6}$, $S_{R7}$, $S_{R5}$, $S_{R9}$, $S_{R10}$,

$S_{R11}$, $S_{R12}$, $S_{R1a}$, $S_{R2a}$, $S_{R3a}$, $S_{R4a}$, $S_{R5a}$, $S_{R6a}$) in each phase to lag the switching state of the corresponding input switch ($Q_1$, $Q_2$, $Q_3$, $Q_4$, $Q_5$, $Q_6$) in the same phase.

11. The three-phase LLC power conversion circuit (1, 1a, 1b, 1c, 1d, 1e) according to any one of claims 8 to 10, wherein the plurality of input switches ($Q_1$, $Q_2$, $Q_3$, $Q_4$, $Q_5$, $Q_6$) comprise a first upper input switch ($Q_1$), a first lower input switch ($Q_2$), a second upper input switch ($Q_3$), a second lower input switch ($Q_4$), a third upper input switch ($Q_5$) and a third lower input switch ($Q_6$), wherein the first upper input switch ($Q_1$) is connected in series with the first lower input switch ($Q_2$) to form a first input switch bridge, the second upper input switch ($Q_3$) is connected in series with the second lower input switch ($Q_4$) to form a second input switch bridge, and the third upper input switch ($Q_5$) is connected in series with the third lower input switch ($Q_6$) to form a third input switch bridge, wherein the first input switch bridge, the second input switch bridge and the third input switch bridge are connected in parallel.

12. The three-phase LLC power conversion circuit (1, 1a, 1b, 1c, 1d, 1e) according to any one of claims 8 to 10, wherein the plurality of input switches ($Q_1$, $Q_2$, $Q_3$, $Q_4$, $Q_5$, $Q_6$) comprise a first upper input switch ($Q_1$), a first lower input switch ($Q_2$), a second upper input switch ($Q_3$), a second lower input switch ($Q_4$), a third upper input switch ($Q_5$) and a third lower input switch ($Q_6$), wherein the first upper input switch ($Q_1$) is connected in series with the first lower input switch ($Q_2$), the second upper input switch ($Q_3$) is connected in series with the second lower input switch ($Q_4$), and the third upper input switch ($Q_5$) is connected in series with the third lower input switch ($Q_6$), wherein the first upper input switch ($Q_1$), the first lower input switch ($Q_2$), the second upper input switch ($Q_3$), the second lower input switch ($Q_4$), the third upper input switch ($Q_5$) and the third lower input switch ($Q_6$) are connected in a cascade manner.

13. The three-phase LLC power conversion circuit (1, 1a, 1b, 1c, 1d, 1e) according to any one of claims 8 to 12, wherein the plurality of rectification switches ($S_{R1}$, $S_{R2}$, $S_{R3}$, $S_{R4}$, $S_{R5}$, $S_{R6}$, $S_{R7}$, $S_{R8}$, $S_{R9}$, $S_{R10}$, $S_{R11}$, $S_{R12}$) comprise a first upper rectification switch ($S_{R1}$), a first lower rectification switch ($S_{R2}$), a second upper rectification switch ($S_{R3}$), a second lower rectification switch ($S_{R4}$), a third upper rectification switch ($S_{R5}$), a third lower rectification switch ($S_{R6}$), and a fourth upper rectification switch ($S_{R7}$), a fourth lower rectification switch ($S_{R8}$), a fifth upper rectification switch ($S_{R9}$), a fifth lower rectification switch ($S_{R10}$), a sixth upper rectification switch ($S_{R11}$) and a sixth lower rectification switch ($S_{R12}$), wherein the first upper rectification switch ($S_{R1}$) and the first lower rectification switch ($S_{R2}$) are connected in series to form a first rectification bridge, the second upper rectification switch ($S_{R3}$) and the second lower rectification switch ($S_{R4}$) are connected in series to form a second rectification bridge, the first rectification bridge is connected in parallel with the second rectification bridge, wherein the third upper rectification switch ($S_{R5}$) and the third lower rectification switch ($S_{R6}$) are connected in series to form a third rectification bridge, the fourth upper rectification switch ($S_{R7}$) and the fourth lower rectification switch ($S_{R8}$) are connected in series to form a fourth rectification bridge, the third rectification bridge is connected in parallel with the fourth rectification bridge, wherein the fifth upper rectification switch ($S_{R9}$) and the fifth lower rectification switch ($S_{R10}$) are connected in series to form a fifth rectification bridge, the sixth upper rectification switch ($S_{R11}$) and the sixth lower rectification switch ($S_{R12}$) are connected in series to form a sixth rectification bridge, and the fifth rectification bridge is connected in parallel with the sixth rectification bridge.

14. The three-phase LLC power conversion circuit (1, 1a, 1b, 1c, 1d, 1e) according to any one of claims 8 to 13, wherein the plurality of primary windings ($T_{1p}$, $T_{2p}$, $T_{3p}$) of the three-phase transformer (T) are delta-connected, and the plurality of secondary windings ($T_{15}$, $T_{2s}$, $T_{3s}$) of the three-phase transformer (T) are delta-connected.

15. The three-phase LLC power conversion circuit (1, 1a, 1b, 1c, 1d, 1e) according to any one of claims 8 to 14, wherein the plurality of primary windings ($T_{1p}$, $T_{2p}$, $T_{3p}$) of the three-phase transformer (T) are delta-connected, and the plurality of secondary windings ($T_{1s}$, $T_{2s}$, $T_{3s}$) of the three-phase transformer (T) are delta-connected.

Detecting each zero-crossing point of the input voltage, the output voltage and each output current of the three-phase LLC power conversion circuit in each phase — S1

Controlling the plurality of input switches to perform switching operation and controlling the plurality of rectification switches to perform synchronous rectification switching operation based on detection results of the step S1, and controlling the output switch group in each phase according to a ratio of the output voltage to the input voltage, wherein a switching state of at least one of the rectification switches is controlled to lead or lag a switching state of the corresponding input switch, and/or adjusting the plurality of input switches in each phase to increase a duty cycle, so that the ratio of the output voltage to the input voltage is increased, wherein switching frequencies of the plurality of input switches are adjusted according to the output voltage, a reference voltage and a soft switching setting condition, so that the plurality of input switches perform soft switching — S2

FIG. 1

EP 4 601 172 A1

FIG. 2

FIG. 3

FIG.4

EP 4 601 172 A1

$\Delta T$

$Q_{1A}$
$Q_{8A}$

$I_{P1}$
$I_{M1}$

$I_{S1}$

**FIG.5**

$\Delta T$

$Q_{1A}$
$Q_{8A}$

$I_{P1}$
$I_{M1}$

$I_{S1}$

**FIG.6**

FIG.7

FIG.8

FIG.9

FIG.10

FIG.11

EP 4 601 172 A1

FIG.12

FIG.13

FIG.14

EP 4 601 172 A1

FIG.15A

FIG.15B

FIG.15C

FIG.16B

FIG.16A

EP 4 601 172 A1

5a

$T_A$   $L_{mA}$

$L_{mB}$   $L_{rA}$   $L_{mC}$

$L_{rB}$   $L_{rC}$

$T_B$   $T_C$

## FIG.17A

5b

$L_{rA}$   $T_A$

$L_{rB}$   $T_B$

$L_{rC}$   $T_C$

## FIG.17B

6

| $L_{rC}$ | $L_{rA}$ | $L_{rB}$ |
| $T_A$ | $T_B$ | $T_C$ |

## FIG.17C

$\Phi_{mA}$

$\Phi_{\Sigma A}$

$\Phi_{LrB}$   $\Phi_{LrA}$

$\Phi_{mB}$   $\Phi_{LrC}$   $\Phi_{mC}$

## FIG.17D

FIG.18A

FIG.18B

EP 4 601 172 A1

5c

$L_{rA}$

$T_{AB}$ $T_{CA}$

$L_{mAB}$

$L_{mCA}$

$L_{mBC}$

$L_{rB}$ $L_{rC}$

$T_{BC}$

**FIG.19A**

6

| $L_{rC}$ | $L_{rA}$ | $L_{rB}$ |
| $T_{AB}$ | $T_{BC}$ | $T_{CA}$ |

**FIG.19B**

$\Phi_{mAB}$

$\Phi_{LrBC}$

$\Phi_{LrB}$ $\Phi_{LrA}$

$\Phi_{LrAB}$

$\Phi_{mBC}$ $\Phi_{LrCA}$ $\Phi_{LrC}$ $\Phi_{mCA}$

**FIG.19C**

FIG.20A

FIG.20B

5d

6

$T_{AB}$   $L_{rCA}$   $T_{CA}$

$L_{mAB}$

$L_{rAB}$   $L_{mCA}$

$L_{mBC}$

$L_{rB}$   $L_{rBC}$   $L_{rC}$

$T_{BC}$

**FIG.21A**

| $L_{rCA}$ | $L_{rAB}$ | $L_{rBC}$ |
|-----------|-----------|-----------|
| $T_{AB}$  | $T_{BC}$  | $T_{CA}$  |

**FIG.21B**

$\Phi_{mAB}$

$\Phi_{LrBC}$   $\Phi_{LrAB}$

$\Phi_{mBC}$   $\Phi_{LrCA}$   $\Phi_{mCA}$

**FIG.21C**

EP 4 601 172 A1

FIG.22B

$\phi_{mCA}$

$-\phi_{LrBC}$

$\phi_{mAB}$

$-\phi_{LrAB}$

$-\phi_{LrCA}$

$\phi_{mBC}$

FIG.22A

6

$L_{rAB}$

$L_{rBC}$

$L_{rCA}$

$T_{AB}$

$T_{BC}$

$T_{CA}$

FIG.23A

FIG.23B

FIG.23C

FIG.23D

FIG.23E

FIG.23F

FIG.24

FIG.25

EP 4 601 172 A1

Europäisches
Patentamt

European
Patent Office

Office européen
des brevets

# EUROPEAN SEARCH REPORT

**Application Number**

EP 25 15 6266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHI ZHE ET AL: "A Secondary-Side Semiactive 3-Phase Interleaved Resonant Converter Employing Multimode Modulation Scheme for Fast EV Charger Applications", IEEE TRANSACTIONS ON POWER ELECTRONICS, INSTITUTE OF ELECTRICAL AND ELECTRONICS ENGINEERS, USA, vol. 37, no. 11, 2 June 2022 (2022-06-02), pages 13385-13397, XP011915126, ISSN: 0885-8993, DOI: 10.1109/TPEL.2022.3179974 [retrieved on 2022-06-03] * abstract * * Section II. Proposed Converter and Working Principle$ Section III. Characterization and Control; figures 1, 2, 5-9 * | 1-15 | INV. H02M1/00 H02M3/00 H02M3/335 H01F27/34 |
| A | EP 3 054 593 B1 (HUAWEI TECH CO LTD [CN]) 9 June 2021 (2021-06-09) * abstract; figure 11 * | 1-15 | |
| A | LINARES DANIEL RIOS ET AL: "Three-Phase LLC DC/DC Converter in Stack Configuration: A Topology for High-Voltage Conversion Ratio Applications", 2023 IEEE APPLIED POWER ELECTRONICS CONFERENCE AND EXPOSITION (APEC), IEEE, 19 March 2023 (2023-03-19), pages 1747-1752, XP034351052, DOI: 10.1109/APEC43580.2023.10131367 [retrieved on 2023-05-31] * abstract; figure 1 * | 1-15 | **TECHNICAL FIELDS SEARCHED (IPC)** H02M |

-/--

The present search report has been drawn up for all claims

| Place of search | Date of completion of the search | Examiner |
|---|---|---|
| The Hague | 19 May 2025 | Van der Meer, Paul |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 25 15 6266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHU LIANGCAI ET AL: "Analysis and Design of Bidirectional Three-phase Triple-Voltage LLC (T2-LLC) Resonant Converter for Solid-State Transformer Application", 2021 IEEE SUSTAINABLE POWER AND ENERGY CONFERENCE (ISPEC), IEEE, 23 December 2021 (2021-12-23), pages 3305-3310, XP034104990, DOI: 10.1109/ISPEC53008.2021.9736047 [retrieved on 2022-03-14] * abstract; figure 1 * | 1-15 | |
| A | GADELRAB RIMON ET AL: "Three-Phase Interleaved LLC Resonant Converter with Integrated Planar Magnetics for Telecom and Server Application", 2020 IEEE APPLIED POWER ELECTRONICS CONFERENCE AND EXPOSITION (APEC), IEEE, 15 March 2020 (2020-03-15), pages 512-519, XP033784885, DOI: 10.1109/APEC39645.2020.9124392 [retrieved on 2020-06-23] * abstract; figure 4 * | 1-15 | TECHNICAL FIELDS SEARCHED (IPC) |
| A | US 2023/122794 A1 (GADELRAB RIMON [US] ET AL) 20 April 2023 (2023-04-20) * abstract; figure 1 * | 1-15 | |

The present search report has been drawn up for all claims

| Place of search | Date of completion of the search | Examiner |
|---|---|---|
| The Hague | 19 May 2025 | Van der Meer, Paul |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 6266

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2025

| Patent document cited in search report | | Publication date | Patent family member(s) | | Publication date |
|---|---|---|---|---|---|
| EP 3054593 | B1 | 09-06-2021 | CN | 103595367 A | 19-02-2014 |
| | | | EP | 3054593 A1 | 10-08-2016 |
| | | | US | 2016254756 A1 | 01-09-2016 |
| | | | US | 2019109542 A1 | 11-04-2019 |
| | | | WO | 2015066997 A1 | 14-05-2015 |
| US 2023122794 | A1 | 20-04-2023 | NONE | | |

EPO FORM P0459

For more details about this annex : see Official Journal of the European Patent Office, No. 12/82